(19) Europäisches Patentamt
European Patent Office
Office européen des brevets

(11) EP 3 010 116 A1

(12) EUROPEAN PATENT APPLICATION
published in accordance with Art. 153(4) EPC

(43) Date of publication:
**20.04.2016 Bulletin 2016/16**

(21) Application number: **14811462.2**

(22) Date of filing: **28.05.2014**

(51) Int Cl.:
***H02J 50/00*** *(2016.01)*

(86) International application number:
**PCT/JP2014/064089**

(87) International publication number:
**WO 2014/199827 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2013 JP 2013122696**

(71) Applicant: **Nitto Denko Corporation**
**Ibaraki-shi, Osaka 567-8680 (JP)**

(72) Inventors:
- **TSUDA, Hisashi**
  **Ibaraki-shi**
  **Osaka 567-8680 (JP)**
- **HATANAKA, Takezo**
  **Ibaraki-shi**
  **Osaka 567-8680 (JP)**

(74) Representative: **Müller-Boré & Partner**
**Patentanwälte PartG mbB**
**Friedenheimer Brücke 21**
**80639 München (DE)**

# (54) ELECTRICITY SUPPLY MODULE USING WIRELESS POWER TRANSMISSION AND POWER SUPPLY METHOD OF ELECTRICITY SUPPLY MODULE

(57) A power-supplying module and a power-supplying method for the power-supplying module, by which power consumption of the power-supplying module is reduced without providing an additional device, when the power-supplying module and a power-receiving module are not in a power-suppliable region (i.e., in a standby state) are provided.

A power-supplying module 2 which is connected with a AC power source 6 and supplies power to a power-receiving module 3 by utilizing a resonance phenomenon is driven at a power-source frequency in which an input impedance $Z_{in}$ of the power-supplying module 2 in a standby state is higher than an input impedance $Z_{in}$ of the power-supplying module 2 and the power-receiving module 3 in a power-supplying state.

FIG.12

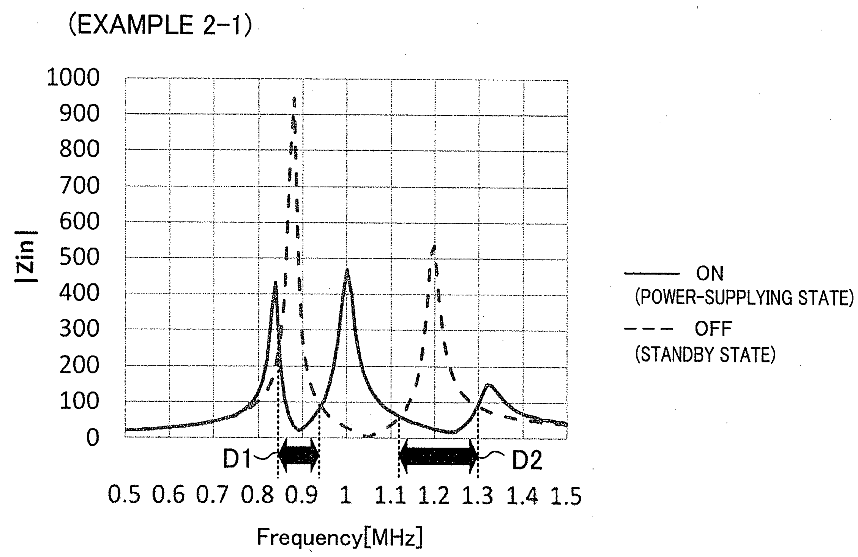


EP 3 010 116 A1

## Description

[Technical Field]

The present invention relates to a power-supplying module used for wireless power transmission and a power-supplying method of the power-supplying module.

[Background]

Portable electronic devices such as laptop PCs, tablet PCs, digital cameras, mobile phones, portable gaming devices, earphone-type music players, wireless headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power supplying technology (wireless power transmission technology performing power transmission by varying the magnetic field) that performs wireless power transmission between a power-supplying module and a power-receiving module mounted in an electronic device.

For Example, as a wireless power transmission technology, there have been known, for Example, a technology that performs power transmission by means of electromagnetic induction between coils (e.g. see PTL 1), a technology that performs power transmission by means of resonance phenomenon (magnetic field resonant state) between resonators (coils) provided to the power-supplying device (power-supplying module) and the power-receiving device (power-receiving module) (e.g. see PTL 2).

For Example, when wireless power transmission is performed by coupling magnetic fields by utilizing resonance phenomenon (magnetic field resonant state) between resonators (coils) of the power-supplying module and the power-receiving module above, it is necessary to bring the power-receiving module close to the power-supplying module so that the power-receiving module and the power-receiving module are within a distance (power-suppliable region) in which power supply from the power-supplying module to the power-receiving module is possible. In this using process, when the power-supplying module and the power-receiving module are not in the power-suppliable region, power is always supplied to the power-supplying module to prepare for a future arrangement of the power-receiving module in the power-suppliable region, and hence the power is wastefully consumed (i.e., standby power consumption is large).

To solve this problem, a countermeasure has been proposed, that is, a detector (sensor or the like) is provided in the power-supplying module or the power-receiving module, the detector detects a change which is caused when arranging both the power-supplying module and the power-receiving module in the power-suppliable region, and power supply to the power-supplying module starts based on the detection result.

For Example, in a power-supplying device (power-supplying module) of a power-supplying system recited in PTL 3 , a detector (current/voltage detector 113) is provided and an impedance is calculated based on a current value or voltage value measured by the detector. By comparing a change in this impedance (e.g. , an increase in the impedance; see the paragraph [0047] or the like) with a predetermined threshold, whether a power-supplying device (power-supplying module) and a secondary-side device (power-receiving module) are in a power-suppliable region is determined in this power-supplying device.

Furthermore, by providing the detector as above and determining whether the power-supplying module and the power-receiving module are in the power-suppliable region, the power supply to the power-supplying module is stopped when the power-supplying module and the power-receiving module are not in the power-suppliable region, with the result that wasteful power consumption is prevented.

[Citation List]

[Patent Literatures]

[PTL 1] Japanese Patent No. 4624768
[PTL 2] Japanese Unexamined Patent Publication No. 2010-239769
[PTL 3] Japanese Unexamined Patent Publication No. 2013-62895

[Summary of Invention]

[Technical Problem]

However, additionally providing a detector as above is costly and is disadvantageous in terms of the downsizing of the power-supplying module.

Furthermore, when a detector is provided, it is necessary to activate the detector at predetermined time intervals (i.e., intermittently). The activation of the detector requires power, and hence power is consumed even if the power-supplying module and the power-receiving module are not in the power-suppliable region (see the paragraph [0044] of PTL 3).

An object of the present invention is therefore to provide a power-supplying module and a power-supplying method for the power-supplying module, by which power consumption of the power-supplying module is reduced without providing an additional device, when the power-supplying module and a power-receiving module are not in a power-suppliable region (i.e., in a standby state).

[Solution to Problem]

According to an aspect of the invention for solving the problem above is a power-supplying module for supplying power from the power-supplying module connected with a power source to a power-receiving module by utilizing resonance phenomenon, the power-supplying module being driven at a power-source frequency of the power source so that an input impedance of the power-supplying module in a standby state in which no power is supplied from the power-supplying module to the power-receiving module is higher than an input impedance of the power-supplying module and the power-receiving module in a power-supplying state in which the power is supplied from the power-supplying module to the power-receiving module.

According to this arrangement, because the input impedance of the power-supplying module in the standby state is higher than the input impedance of the power-supplying module and the power-receiving module in the power-supplying state, the power consumption of the power-supplying module in the standby state is reduced as compared to the power consumption in the power-supplying state.

According to another aspect of the invention for solving the problem above, the power-supplying module includes a power-supplying coil, a power-supplying resonator, and a power-receiving resonator, the power-receiving module includes a power-receiving coil, and the power is supplied by utilizing the resonance phenomenon occurring between the power-supplying resonator and the power-receiving resonator.

According to the arrangement above, the input impedance of the power-supplying module in the standby state can be used as the input impedance of the power-supplying module including the power-supplying coil, the power-supplying resonator, and the power-receiving resonator.

Because the power-supplying module is formed of at least three elements, i.e., the power-supplying coil, the power-supplying resonator, and the power-receiving resonator, the number of the elements for determining the input impedance of the power-supplying module is large. When the number of the elements for determining the input impedance of the power-supplying module is large, the number of the elements for determining the relationship of the input impedance of the power-supplying module with the power-source frequency of the power source is also large, with the result that the design freedom of the power-supplying module is enhanced.

In addition to the above, because the power-receiving module is arranged to include the power-receiving coil, the downsizing of the power-receiving module is realized.

According to another aspect of the invention for solving the problem above, the power-supplying module includes a power-supplying coil and a power-supplying resonator, the power-receiving module includes a power-receiving resonator and a power-receiving coil, and the power is supplied by utilizing the resonance phenomenon occurring between the power-supplying resonator and the power-receiving resonator.

According to this arrangement, the input impedance of the power-supplying module in the standby state can be used as the input impedance of the power-supplying module including the power-supplying coil and the power-supplying resonator.

Because the power-supplying module is formed of at least two elements, i.e., the power-supplying coil and the power-supplying resonator, the number of the elements for determining the input impedance of the power-supplying module is large. When the number of the elements for determining the input impedance of the power-supplying module is large, the number of the elements for determining the relationship of the input impedance of the power-supplying module with the power-source frequency of the power source is also large, with the result that the design freedom of the power-supplying module is enhanced.

In addition to the above, because the power-receiving module is arranged to include the power-receiving resonator and the power-receiving coil, the downsizing of the power-receiving module is realized.

According to another aspect of the invention for solving the problem above, the power-supplying module includes a power-supplying coil, the power-receiving module includes a power-supplying resonator, a power-receiving resonator, and a power-receiving coil, and the power is supplied by utilizing the resonance phenomenon occurring between the power-supplying resonator and the power-receiving resonator.

According to the arrangement above, the input impedance of the power-supplying module in the standby state can be used as the input impedance of the power-supplying coil.

Because the power-supplying module is formed mainly of one element, i.e., the power-supplying coil, the element for determining the input impedance of the power-supplying module is unified. When the element for determining the input impedance of the power-supplying module is unified, the element for determining the relationship of the input impedance of the power-supplying module with the power-source frequency of the power source is also unified, with the result that the design of the power-supplying module is simplified.

According to another aspect of the invention for solving the problem above, a power-supplying method for a power-supplying module for supplying power from the power-supplying module connected with a power source to a power-receiving module by utilizing resonance phenomenon, comprising the step of: adjusting a power-source frequency of the power source to a band in which an input impedance of the power-supplying module in a standby state in which no power is supplied from the power-supplying module to the power-receiving module is higher than an input impedance of the power-supplying module and the power-receiving module in a power-supplying state in which the power is supplied from the power-supplying module to the power-receiving module.

According to the method above, because the input impedance of the power-supplying module in the standby state is higher than the input impedance of the power-supplying module and the power-receiving module in the power-supplying state, the power consumption of the power-supplying module in the standby state is reduced as compared to the power consumption in the power-supplying state.

[Advantageous Effects]

A power-supplying module and a power-supplying method for the power-supplying module, by which power consumption of the power-supplying module is reduced without providing an additional device, when the power-supplying module and a power-receiving module are not in a power-suppliable region (i.e., in a standby state) are provided.

[Brief Description of Drawings]

[FIG. 1] FIG. 1 illustrates a charger on which a power-supplying module is mounted and a wireless headset on which a power-receiving module is mounted.
[FIG. 2] FIG. 2 illustrates the power-supplying module and the power-receiving module in a standby state.
[FIG. 3] FIG. 3 illustrates the power-supplying module and the power-receiving module in the power-supplying state as an equivalent circuit.
[FIG. 4] FIG. 4 is a graph indicating relation of transmission characteristic "S21" to a power-source frequency.
[FIG. 5] FIG. 5 illustrate a power-supplying module of Example 1-1 as an equivalent circuit.
[FIG. 6] FIG. 6 is a graph showing an analysis result of Example 1-1.
[FIG. 7] FIG. 7 shows a power-supplying module of Example 1-2 as an equivalent circuit.
[FIG. 8] FIG. 8 is a graph showing an analysis result of Example 1-2.
[FIG. 9] FIG. 9 illustrates a power-supplying module of Example 1-3 as an equivalent circuit.
[FIG. 10] FIG. 10 is a graph showing an analysis result of Example 1-3.
[FIG. 11] FIG. 11 illustrates a power-supplying module of Example 2-1 as an equivalent circuit.
[FIG. 12] FIG. 12 is a graph showing an analysis result of Example 2-1.
[FIG. 13] FIG. 13 illustrates a power-supplying module of Example 2-2 as an equivalent circuit.
[FIG. 14] FIG. 14 is a graph showing an analysis result of Example 2-2.
[FIG. 15] FIG. 15 illustrates a power-supplying module of Example 2-3 as an equivalent circuit.
[FIG. 16] FIG. 16 is a graph showing an analysis result of Example 2-3.
[FIG. 17] FIG. 17 shows a graph of an analysis result of Example 3-1.
[FIG. 18] FIG. 18 shows a graph of an analysis result of Example 3-2.
[FIG. 19] FIG. 19 shows a graph of an analysis result of Example 3-3.
[FIG. 20] FIG. 20 shows a graph of an analysis result of Example 4-1.
[FIG. 21] FIG. 21 shows a graph of an analysis result of Example 4-2.
[FIG. 22] FIG. 22 shows a graph of an analysis result of Example 4-3.
[FIG. 23] FIG. 23 is a flowchart illustrating a method of designing a charger on which a power-supplying module is mounted and a wireless headset on which a power-receiving module is mounted.

[Description of Embodiments]

The following will describe a power-supplying module for wireless power transmission and a power-supplying method for the power-supplying module according to an embodiment of the present invention.

(Embodiment)

To begin with, the present embodiment will describe, as an example, a charger 101 including a power-supplying module 2 and a wireless headset 102 including a power-receiving module 3, which realize wireless power transmission.

(Structure of Charger 101 and Structure of Wireless Headset 102)

As shown in FIG. 1, the charger 101 includes the power-supplying module 2 which is provided with a power-supplying coil 21 and a power-supplying resonator 22. The wireless headset 102 includes an earphone speaker portion 102a and the power-receiving module 3 which is provided with a power-receiving coil 31 and a power-receiving resonator 32.

The power-supplying coil 21 of the power-supplying module 2 is connected to an AC power source 6 having an oscillation circuit configured to set the power-source frequency of power supplied to the power-supplying module 2 to a predetermined value. The power-receiving coil 31 of the power-receiving module 3 is connected to a rechargeable battery 9 via a stabilizer circuit 7 configured to rectify the AC power received and a charging circuit 8 configured to prevent overcharge. For the sake of convenience, FIG. 1 illustrates the stabilizer circuit 7, the charging circuit 8, and the rechargeable battery 9 outside the power-receiving module 3; however, they are actually disposed on the inner circumference side of the solenoid power-receiving coil 31 and the solenoid coil of the power-receiving resonator 32. It should be noted that, as shown in FIG. 1, the stabilizer circuit 7, the charging circuit 8, and the rechargeable battery 9 of the present embodiment are a device to be power-supplied electronic device 10 which is the final destination of the supplied power. The power-supplied electronic device 10 is a generic term for the entire device to which the supplied power is destined, which is connected to the power-receiving module 3.

Although not illustrated, the charger 101 is provided with a housing groove which is provided for housing the wireless headset 102 and is shaped in accordance with the shape of the wireless headset 102. As the wireless headset 102 is housed in this housing groove of the charger 101, the wireless headset 102 is positioned so that the power-supplying module 2 of the charger 101 and the power-receiving module 3 of the wireless headset 102 oppose each other.

The power-supplying coil 21 plays a role of supplying power obtained from the AC power source 6 to the power-supplying resonator 22 by means of electromagnetic induction. As shown in FIG. 3, the power-supplying coil 21 is constituted by an RLC circuit whose elements include a resistor $R_1$, a coil $L_1$, and a capacitor $C_1$. The coil $L_1$ part is a solenoid coil with the coil diameter of 15mmϕ, which is formed by winding a copper wire material (coated by an insulation film) with the wire diameter of 0.4mmϕ 18 times. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 3, the power-receiving coil 31, similarly to the power-supplying coil 21, is constituted by an RLC circuit whose elements include a resistor $R_4$, a coil $L_4$, and a capacitor $C_4$. The coil $L_4$ part is a solenoid coil with the coil diameter of 15mmϕ, which is formed by winding a copper wire material (coated by an insulation film) with the wire diameter of 0.4mmϕ 18 times.

The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. Further, while the total impedance of the power-supplied electronic device 10 connected to the power-receiving coil 31 is $Z_L$, the total load impedance of the stabilizer circuit 7, the charging circuit 8, and the rechargeable battery 9 (power-supplied electronic device 10) connected to the power-receiving coil 31 is implemented in the form of a resistor $R_L$ (corresponding to $Z_L$) as shown in FIG. 3, in the present embodiment for the sake of convenience. Further, the current that flows in the power-receiving coil 31 is $I_4$.

As shown in FIG. 3, the power-supplying resonator 22 is constituted by an RLC circuit whose elements include a resistor $R_2$, a coil $L_2$, and a capacitor $C_2$. Further, as shown in FIG. 3, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state.

The magnetic field resonant state (resonance phenomenon) here is a phenomenon in which two or more coils resonate with each other in a resonance frequency band. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying coil 21, the power-supplying resonator 22, the power-receiving resonator 32, and the power-receiving coil 31, the resonance frequency is f which is derived from (Formula 1) below, where the inductance is L and the capacity of capacitor is C. In the present embodiment, the resonance frequency of the power-supplying coil 21, the power-supplying resonator 22, the power-receiving resonator 32, and the power-receiving coil 31 is set to 1.0 MHz.

$$f = \frac{1}{2\pi\sqrt{LC}} \quad \text{... ((Formula 1))}$$

Each of the power-supplying resonator 22 and the power-receiving resonator 32 is a solenoid coil with the coil diameter of 15mmϕ, which is formed by winding a copper wire material (coated by an insulation film) with the wire diameter of 0.4mmϕ 18 times. The resonance frequency of the power-supplying resonator 22 and that of the power-receiving resonator 32 are matched with each other, as described above.

The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 3, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. In the power-supplying module 2 and the power-receiving module 3, the coupling coefficient between the coil $L_1$ and the coil $L_2$ is represented as $k_{12}$, the coupling coefficient between the coil $L_2$ and the coil $L_3$ is represented as $k_{23}$, and the coupling coefficient between the coil $L_3$ and the coil $L_4$ is $k_{34}$.

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 are parameters variable at the stage of designing and manufacturing.

In the power-supplying module 2 and the power-receiving module 3 above, when the resonance frequency of the power-supplying resonator 22 and the resonance frequency of the power-receiving resonator 32 are arranged to be identical with each other, a magnetic field resonant state is created between the power-supplying resonator 22 and the power-receiving resonator 32. When a magnetic field resonant state is created while the power-supplying resonator 22 and the power-receiving resonator 32 are in resonance, power transmission from the power-supplying resonator 22 to the power-receiving resonator 32 as a magnetic field energy becomes possible. On this account, wireless power transmission from the charger 101 including the power-supplying module 2 to the wireless headset 102 including the power-receiving module 3 is performed, with the result that the rechargeable battery 9 in the wireless headset 102 is charged.

In regard to the above, as shown in FIG. 1 and FIG. 3, a state in which power is being supplied from the power-supplying module 2 to the power-receiving module 3 is referred to as a power-supplying state. To put it differently, this power-supplying state is a state in which the power-supplying resonator 22 and the power-receiving resonator 32 of the power-supplying module 2 and the power-receiving module 3 have created the magnetic field resonant state. Furthermore, the power-supplying state is a state established when the distance d23 between the power-supplying resonator 22 and the power-receiving resonator 32 is relatively short (i.e., these resonators are in the power-suppliable region).

In the present embodiment, the power-supplying state is a state in which the rechargeable battery 9 of the wireless headset 102 is being charged.

In the meanwhile, as shown in FIG. 2, a state in which no power is supplied from the power-supplying module 2 to the power-receiving module 3 is referred to as a standby state.

To put it differently, this standby state is a state in which the power-supplying resonator 22 and the power-receiving resonator 32 of the power-supplying module 2 and the power-receiving module 3 do not create the magnetic field resonant state. Furthermore, the standby state is a state in which the distance d23 between the power-supplying resonator 22 and the power-receiving resonator 32 is not sufficiently short to create the magnetic field resonant state. In the present embodiment, the standby state is a state in which the rechargeable battery 9 of the wireless headset 102 is not charged.

(Relationship between Input Impedance in Standby State and Input Impedance in Power-Supplying State)

Now, based on the concepts of the standby state and the power-supplying state, the following will describe the relationship between the input impedance in the standby state and the input impedance in the power-supplying state of the power-supplying module 2 and the power-receiving module 3 for reducing the power consumption of the power-supplying module 2 in the standby state.

To begin with, why the power consumption in the standby state should be reduced in power transmission using wireless power transmission will be described. As described above, when wireless power transmission is performed by coupling magnetic fields between the power-supplying resonator 22 and the power-receiving resonator 32 of the power-supplying module 2 and the power-receiving module 3 by means of resonance phenomenon (magnetic field resonant state), it is necessary to bring the power-receiving module 3 close to the power-supplying module 2 so that the distance between the modules are sufficiently close (in the power-suppliable region) for supplying power from the power-supplying module 2 to the power-receiving module 3. In this using process, when the power-supplying module and the power-receiving module are not in the power-suppliable region (i.e. , in the standby state), power is always supplied to the power-supplying module to prepare for a future arrangement of the power-receiving module in the power-suppliable region (i.e., in the power-supplying state).

In this case, the power supplied to the power-supplying module 2 in the standby state is wasted.

In the meanwhile, in the standby state, when the power-receiving module is provided in the power-suppliable region, power supply to the power-supplying module 2 must be maintained in consideration of prompt shift to the power-supplying state.

For this reason, the power consumption in the standby state is required to be restrained as compared to the power consumption in the power-supplying state.

To restrain the power consumption in the standby state as compared to the power consumption in the power-supplying state, an input impedance $Z_{in}$ in the standby state is arranged to be higher than an input impedance $Z_{in}$ in the power-supplying state, because the power consumption P is calculated by (Formula 2) below. It is noted that, because a voltage V (effective value) supplied to the power-supplying module 2 by an AC power source 6 is maintained to be constant, the voltage V is not a variable element.

$$P = \frac{V^2}{|Z_{in}|} \quad \text{... (Formula 2)}$$

As such, the power-supplying module 2 of the present embodiment is arranged such that the input impedance $Z_{in}$ of the power-supplying module 2 in the standby state is higher than the input impedance $Z_{in}$ of the power-supplying module 2 and the power-receiving module 3 in the power-supplying state, and driving is performed with a power-source frequency with which the input impedance $Z_{in}$ of the power-supplying module 2 in the standby state is higher than the input impedance $Z_{in}$ of the power-supplying module 2 and the power-receiving module 3 of the power-supplying state. Because in this arrangement the input impedance $Z_{in}$ of the power-supplying module 2 in the standby state is higher than the input impedance $Z_{in}$ of the power-supplying module 2 and the power-receiving module 3 in the power-supplying state, the power consumption of the power-supplying module 2 in the standby state is arranged to be restrained as compared to the power consumption in the power-supplying state.

The arrangement above will be described with reference to Examples below. In Examples below, by using differently-arranged power-supplying modules 2 and power-receiving modules 3, the input impedance $Z_{in}$ at the power-source frequency in the standby state (OFF) and the input impedance $Z_{in}$ at the power-source frequency in the power-supplying state (ON) were analyzed. In Examples, analysis was performed under a condition that a variable resistor 11 ($R_l$) was connected instead of the stabilizer circuit 7, the charging circuit 8, and the rechargeable battery 9.

In Example 1-1 to Example 2-3, analysis was performed under a condition that a transmission characteristic "S21" with respect to the power-source frequency of the power supplied to the power-supplying module 2 and the power-receiving module 3 in the power-supplying state had the double-hump characteristic. In Example 3-1 to Example 4-3, analysis was performed under a condition that the transmission characteristic "S21" with respect to the power-source frequency of the power supplied to the power-supplying module 2 and the power-receiving module 3 in the power-supplying state had the single-hump characteristic.

The transmission characteristic "S21" is signals measured by a network analyzer connected to the power-supplying module 2 and the power-receiving module 3, and is indicated in decibel.

The greater the value, it means the power transmission efficiency is high. The transmission characteristic "S21" relative to the power-source frequency of the power supplied to the power-supplying module 2 and the power-receiving module 3 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the power-source frequency has a single peak which occurs in the resonance frequency band (fo) (See dotted line 51 FIG. 4). The double-hump characteristic on the other hand means the transmission characteristic S21 relative to the driving frequency has two peaks, one of the peaks occurring in a power-source frequency band lower than the resonance frequency (fL), and the other occurring in a power-source frequency band higher than the resonance frequency (fH) (See solid line 52 in FIG. 4). The double-hump characteristic, to be more specific, means that the reflection characteristic "S11" measured with the network analyzer connected to the power-supplying module 2 and the power-receiving module 3 has two peaks. Therefore, even if the transmission characteristic S21 relative to the power-source frequency appears to have a single peak, the transmission characteristic "S21" has a double-hump characteristic if the reflection characteristic S11 measured has two peaks.

In the power-supplying module 2 and the power-receiving module 3 having the single-hump characteristic, the transmission characteristic "S21" is maximized (power transmission efficiency is maximized) when the power-source frequency is at the resonance frequency f0, as indicated by the dotted line 51 of FIG. 4.

On the other hand, in the power-supplying module 2 and the power-receiving module 3 having the double-hump characteristic, the transmission characteristic "S21" is maximized in a power-source frequency band (fL) lower than the resonance frequency fo, and in a power-source frequency band (fH) higher than the resonance frequency fo, as indicated by the solid line 52 of FIG. 4.

It should be noted that, in general, if the distance between the power-supplying resonator 22 and the power-receiving resonator 32 is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at $f_0$) (See graph in FIG. 4).

For example, when the transmission characteristic "S21" has the double-hump characteristic, if the power-source frequency of the AC power supplied to the power-supplying module 2 is set at a frequency band around a peak (fL) which appears in a frequency band lower than the resonance frequency fo, the power-supplying resonator 22 and the power-receiving resonator 32 are in phase and resonated, with the result that the direction of the current flowing in the power-supplying resonator 22 is identical with the direction of the current flowing in the power-receiving resonator 32. As the result, as shown in the graph of FIG. 4, the value of the transmission characteristic S21 is made relatively high (see full line 52), even if the power-source frequency does not match with the resonance frequency of the power-supplying resonator 22 and the power-receiving resonator 32, although the value still may not be as high as that of the transmission characteristic S21 in wireless power transmission apparatuses in general aiming at maximizing the power transmission efficiency (see dotted line 51). In this regard, the resonance state in which the direction of the current flowing in the power-supplying resonator 22 is identical with the direction of the current flowing in the power-receiving resonator 32 are identical will be referred to as an in-phase resonance mode. Furthermore, in the in-phase resonance mode, setting the power-source frequency of the AC power supplied to the power-supplying module 2 in a frequency band lower than the resonance frequency fo when the transmission characteristic "S21" has the double-hump characteristic will be referred to as an in-phase resonance mode in a broad sense, whereas setting the power-source frequency of the AC power supplied to the power-supplying module 2 is set in a frequency band around a peak (fL) (at which the characteristic "S21" is about -10dB or higher) appearing in a frequency band lower than the resonance frequency fo of "S21" will be referred to as an in-phase resonance mode in a narrow sense. Furthermore, in the in-phase resonance mode in the narrow sense, setting the power-source frequency of the AC power supplied to the power-supplying module 2 at a peak (fL) appearing in a frequency band lower than the resonance frequency fo of "S21" will be referred to as an in-phase resonance mode in the narrowest sense.

Further, in the in-phase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g., the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat.

In the meanwhile, when, for example, the transmission characteristic "S21" has the double-hump characteristic and the power-source frequency of the AC power supplied to the power-supplying module 2 is set in a frequency band around the peak (fH) which appears in a frequency band higher than the resonance frequency fo, the power-supplying resonator 22 and the power-receiving resonator 32 are in antiphase and resonated, and hence the direction of the current flowing in the power-supplying resonator 22 is opposite to the direction of the current flowing in the power-receiving resonator 32. As the result, as shown in the graph of FIG. 4, the value of the transmission characteristic S21 is made relatively high (see full line 52), even if the power-source frequency does not match with the resonance frequency of the power-supplying resonator 22 and the power-receiving resonator 32, although the value still may not be as high as that of the transmission characteristic S21 in wireless power transmission apparatuses in general aiming at maximizing the power transmission efficiency (see dotted line 51). The resonance state in which the current in the power-supplying resonator 22 and the current in the power-receiving resonator 32 flow in directions opposite to each other is referred to as antiphase resonance mode. In the antiphase resonance mode, when the transmission characteristic "S21" has the double-hump characteristic, setting the power-source frequency of the AC power supplied to the power-supplying module 2 in a frequency band higher than the resonance frequency fo will be referred to as an antiphase resonance mode in a broad sense, and setting the power-source frequency of the AC power supplied to the power-supplying module 2 in a frequency band around a peak (fH) (at which the value of "S21" is about -10dB or higher) appearing in a frequency band higher than the resonance frequency fo of "S21" will be referred to as an antiphase resonance mode in a narrow sense.

In the antiphase resonance mode in the narrow sense, setting the power-source frequency of the AC power supplied to the power-supplying module 2 at the peak (fH) appearing in a frequency band higher than the resonance frequency fo of "S21" will be referred to as an antiphase resonance mode in the narrowest sense.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g., the magnetic field strengths on the outer circumference side of the power-supplying resonator 22 and the power-receiving resonator 32) are formed on the inner circumference sides of the power-supplying resonator 22 and the power-receiving resonator 32, as the influence of the magnetic fields is lowered. When a stabilizer circuit 7, a charging circuit 8, a rechargeable battery 9, and the like desired to have less influence of the magnetic field is placed in this magnetic field space, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the power-supplying module 2 and the power-receiving module 3 themselves more compact, and improves the freedom in designing.

(Example 1-1)

As shown in FIG. 5, a power-supplying module 2 of Example 1-1 includes a power-supplying coil 21 and a power-supplying resonator 22. In the meanwhile, a power-receiving module 3 includes a power-receiving resonator 32 and a power-receiving coil 31. The power-supplying coil 21 is constituted by an RLC circuit (resonating) including a resistor $R_1$, a coil $L_1$, and a capacitor $C_1$. The coil $L_1$ is a solenoid coil with the coil diameter of 15mmϕ, which is formed by winding a copper wire material (coated by an insulation film) with the wire diameter of 0.4mmϕ 18 times. Similarly, the power-receiving coil 31 is constituted by an RLC circuit including a resistor $R_4$, a coil $L_4$, and a capacitor $C_4$. The coil $L_4$ is a solenoid coil with the coil diameter of 15mmϕ, which is formed by winding a copper wire material (coated by an insulation film) with the wire diameter of 0.4mmϕ 18 times. Further, the power-supplying resonator 22 is constituted by an RLC circuit including a resistor $R_2$, a coil $L_2$, and a capacitor $C_2$. The coil $L_2$ is, a solenoid coil with the coil diameter of 15mmϕ, which is formed by winding a copper wire material (coated by an insulation film) with the wire diameter of 0.4mmϕ 18 times. Furthermore, the power-receiving resonator 32 is constituted by an RLC circuit including a resistor $R_3$, a coil $L_3$, and a capacitor $C_3$, and the coil $L_3$ is a solenoid coil with the coil diameter of 15mmϕ, which is formed by winding a copper wire material (coated by an insulation film) with the wire diameter of 0.4mmϕ 18 times. The values of

$R_1$, $R_2$, $R_3$, and $R_4$ in Example 1-1 were set at 0.5Ω. The values of $L_1$, $L_2$, $L_3$, and $L_4$ were set at 4.5μH. $R_L$ of the power-supplied electronic device 10 was 100Ω. The resonance frequency of the power-supplying coil 21, the power-supplying resonator 22, the power-receiving resonator 32, and the power-receiving coil 31 was 1.0 MHz. Furthermore, each of the coupling coefficients $k_{12}$, $k_{23}$, and $k_{34}$ was 0.3. (It is noted that these coupling coefficients were values in the power-supplying state.)

In the standby state, as shown in FIG. 5, the input impedance of the power-supplying coil 21 and the power-supplying resonator 22 constituting the power-supplying module 2 was $Z_{in}$. In the meanwhile, as shown in FIG. 3, in the power-supplying state, the input impedance in the power-supplying coil 21 and the power-supplying resonator 22 constituting the power-supplying module 2 and the power-receiving resonator 32 and the power-receiving coil 31 constituting the power-receiving module 3 was $Z_{in}$.

In regard to the power-supplying module 2 and the power-receiving module 3 of Example 1-1, an analysis result of the input impedance $Z_{in}$ (indicated by a dotted line in FIG. 6) at the power-source frequency in the standby state and the input impedance $Z_{in}$ (indicated by a full line in FIG. 6) at the power-source frequency in the power-supplying state is shown in FIG. 6. According to the analysis result, power-source frequency bands in which the input impedance $Z_{in}$ (indicated by the dotted line in FIG. 6) of the power-supplying module 2 in the standby state was higher than the input impedance Zin(indicated by the full line in FIG. 6) of the power-supplying module 2 and the power-receiving module 3 in the power-supplying state were three bands, namely a band A1 of about 0.78 to 0.84MHz, a band A2 of about 0.92 to 1.09MHz, and a band A3 of about 1.28 to 1.5 (which was the upper limit of the analysis) MHz.

In Example 1-1, as compared to cases where the power-source frequency was set in the band A1 or in the band A3, the difference between the input impedance $Z_{in}$ of the power-supplying module 2 in the standby state and the input impedance $Z_{in}$ of the power-supplying module 2 and the power-receiving module 3 in the power-supplying state was maximized when the power-source frequency was set in the band A2 , in particular at 1.0MHz. For this reason, the power consumption of the power-supplying module 2 in the standby state was reduced in this case, as compared to cases where the power-source frequency was set in the band A1 or in the band A3. However, as described above, in the power-supplying module 2 and the power-receiving module 3 having the double-hump characteristic, as indicated by the full line 52 in FIG. 4, the transmission characteristic "S21" tends to be low in the resonance frequency band and hence the power transmission efficiency in the power-supplying state tends to be low.

(Example 1-2)

As shown in FIG. 7, a power-supplying module 2 of Example 1-2 includes a power-supplying coil 21, a power-supplying resonator 22, and a power-receiving resonator 32. In the meanwhile, a power-receiving module 3 includes a power-receiving coil 31. The power-supplying coil 21, the power-supplying resonator 22, the power-receiving resonator 32, and the power-receiving coil 31 are structurally identical with those in Example 1-1.

In the standby state, as shown in FIG. 7, the input impedance of the power-supplying coil 21, the power-supplying resonator 22, and the power-receiving resonator 32 constituting the power-supplying module 2 was set at $Z_{in}$. Furthermore, as shown in FIG. 3, in the power-supplying state, the input impedance in the power-supplying coil 21, the power-supplying resonator 22, and the power-receiving resonator 32 constituting the power-supplying module 2 and the power-receiving coil 31 constituting the power-receiving module 3 was set at $Z_{in}$.

In regard to the power-supplying module 2 and the power-receiving module 3 of Example 1-2, an analysis result of the input impedance $Z_{in}$ (indicated by a dotted line in FIG. 8) at the power-source frequency in the standby state and the input impedance $Z_{in}$ (indicated by a full line in FIG. 8) at the power-source frequency in the power-supplying state is shown in FIG. 8. According to the analysis result, power-source frequency bands in which the input impedance $Z_{in}$ (indicated by the dotted line in FIG. 8) of the power-supplying module 2 in the standby state was higher than the input impedance $Z_{in}$ (indicated by the full line in FIG. 8) of the power-supplying module 2 and the power-receiving module 3 in the power-supplying state were two bands, namely a band B1 of about 0.87 to 0.89MHz and a band B2 of about 1.14 to 1.22MHz.

In Example 1-2, when the power-source frequency was set in the band B1 or in the band B2, in particular at around 1.19MHz, the difference between the input impedance $Z_{in}$ of the power-supplying module 2 in the standby state and the input impedance $Z_{in}$ of the power-supplying module 2 and the power-receiving module 3 in the power-supplying state was large, and the power consumption of the power-supplying module 2 in the standby state was reduced. Furthermore, as described above, in the power-supplying module 2 and the power-receiving module 3 having the double-hump characteristic, as indicated by the full line 52 in FIG. 4, the transmission characteristic "S21" is maximized in a power-source frequency band (fL: in the in-phase resonance mode in the narrowest sense) lower than the resonance frequency fo and a power-source frequency band (fH: in the antiphase resonance mode in the narrowest sense) higher than the resonance frequency fo. In Example 1-2, the band B1 is substantially matched with the power-source frequency band in the in-phase resonance mode in the narrow sense, and the band B2 is substantially matched with the power-source frequency band in the antiphase resonance mode in the narrow sense. On this account, the power transmission efficiency in the power-supplying state is relatively high when the power-source frequency is set in the band B1 or the band B2.

(Example 1-3)

A power-supplying module 2 of Example 1-3 includes a power-supplying coil 21 as shown in FIG. 9. In the meanwhile, a power-receiving module 3 includes a power-supplying resonator 22, a power-receiving resonator 32, and a power-receiving coil 31. The power-supplying coil 21, the power-supplying resonator 22, the power-receiving resonator 32, and the power-receiving coil 31 are structurally identical with those in Example 1-1.

In the standby state, as shown in FIG. 9, the input impedance in the power-supplying coil 21 constituting the power-supplying module 2 was set at $Z_{in}$. Furthermore, as shown in FIG. 3, in the power-supplying state, the input impedance in the power-supplying coil 21 constituting the power-supplying module 2 and the power-supplying resonator 22, the power-receiving resonator 32, and the power-receiving coil 31 constituting the power-receiving module 3 was set at $Z_{in}$.

In regard to the power-supplying module 2 and the power-receiving module 3 of Example 1-3, an analysis result of the input impedance $Z_{in}$ (indicated by a dotted line in FIG. 10) at the power-source frequency in the standby state and the input impedance $Z_{in}$ (indicated by a full line in FIG. 10) at the power-source frequency in the power-supplying state is shown in FIG. 10. According to the analysis result, power-source frequency bands in which the input impedance $Z_{in}$ (indicated by the dotted line in FIG. 10) of the power-supplying module 2 in the standby state was higher than the input impedance $Z_{in}$ (indicated by the full line in FIG. 10) of the power-supplying module 2 and the power-receiving module 3 in the power-supplying state were two bands, namely a band C1 of about 0.60 to 0.85MHz and a band C2 of about 1.25 to 1.5 (which was the upper limit of the analysis) MHz.

In Example 1-3, when the power-source frequency was set around 0.84MHz in the band C1 or around 1.32MHz in the band C2, the difference between the input impedance $Z_{in}$ of the power-supplying module 2 in the standby state and the input impedance $Z_{in}$ of the power-supplying module 2 and the power-receiving module 3 in the power-supplying state was relatively large, and the power consumption of the power-supplying module 2 in the standby state was reduced. Furthermore, as described above, in the power-supplying module 2 and the power-receiving module 3 having the double-hump characteristic, as indicated by the full line 52 in FIG. 4, the transmission characteristic "S21" was maximized in a power-source frequency band (fL) lower than the resonance frequency fo and a power-source frequency band (fH) higher than the resonance frequency fo.. In Example 1-3, the power-source frequency band in the in-phase resonance mode in the narrow sense was included in the band C1 (particularly around 0.84MHz) and the power-source frequency band in the antiphase resonance mode in the narrow sense was included in the band C2 (particularly around 1.32MHz). For this reason, when the power-source frequency was set in the in-phase resonance mode in the narrow sense or in the antiphase resonance mode in the narrow sense, with the result that the band C1 or the band C2 was included and the power transmission efficiency in the power-supplying state was relatively high.

(Example 2-1)

In Example 2-1 to Example 2-3, being different from Example 1-1 to Example 1-3, the capacitor $C_1$ in the RLC circuit (the resistor $R_1$, the coil $L_1$, and the capacitor $C_1$) constituting the power-supplying coil 21 in the power-supplying module 2 was connected in a parallel manner, as shown in FIG. 11, FIG. 13, and FIG. 15.

As shown in FIG. 11, a power-supplying module 2 of Example 2-1 includes a power-supplying coil 21 and a power-supplying resonator 22. In the meanwhile, a power-receiving module 3 includes a power-receiving resonator 32 and a power-receiving coil 31. As described above, the power-supplying coil 21 is an RLC circuit formed of a resistor $R_1$, a coil $L_1$, and a capacitor $C_1$, and the capacitor $C_1$ is connected in a parallel manner. The arrangements other than the above are identical with those of Example 1-1.

In the standby state, as shown in FIG. 11, the input impedance in the power-supplying coil 21 and the power-supplying resonator 22 constituting the power-supplying module 2 was set at $Z_{in}$. In the meanwhile, in the power-supplying state, the input impedance in the power-supplying coil 21 and the power-supplying resonator 22 constituting the power-supplying module 2 and the power-receiving resonator 32 and the power-receiving coil 31 constituting the power-receiving module 3 was set at $Z_{in}$.

In regard to the power-supplying module 2 and the power-receiving module 3 of Example 2-1, an analysis result of the input impedance $Z_{in}$ (indicated by a dotted line in FIG. 12) at the power-source frequency in the standby state and the input impedance $Z_{in}$ (indicated by a full line in FIG. 12) at the power-source frequency in the power-supplying state is shown in FIG. 12. According to the analysis result, power-source frequency bands in which the input impedance $Z_{in}$ (indicated by the dotted line in FIG. 12) of the power-supplying module 2 in the standby state was higher than the input impedance $Z_{in}$ (indicated by the full line in FIG. 12) of the power-supplying module 2 and the power-receiving module 3 in the power-supplying state were two bands, namely a band D1 of about 0.84 to 0.93MHz and a band D2 of about 1.12 to 1.30MHz.

In Example 2-1, when the power-source frequency was set in the band D1, in particular at around 0.88MHz, or set in the band D2, the difference between the input impedance $Z_{in}$ of the power-supplying module 2 in the standby state and the input impedance $Z_{in}$ of the power-supplying module 2 and the power-receiving module 3 in the power-supplying state was maximized, and hence the power consumption of the power-supplying module 2 in the standby state was reduced.

Furthermore, as described above, in the power-supplying module 2 and the power-receiving module 3 having the double-hump characteristic, as indicated by the full line 52 in FIG. 4, the transmission characteristic "S21" is maximized in a power-source frequency band (fL: in the in-phase resonance mode in the narrowest sense) lower than the resonance frequency fo and a power-source frequency band (fH: in the antiphase resonance mode in the narrowest sense) higher than the resonance frequency fo. In Example 2-1, the band D1 is substantially matched with the power-source frequency band in the in-phase resonance mode in the narrow sense, and the band D2 is substantially matched with the power-source frequency band in the antiphase resonance mode in the narrow sense. On this account, the power transmission efficiency in the power-supplying state is relatively high when the power-source frequency is set in the band D1 or the band D2.

(Example 2-2)

A power-supplying module 2 of Example 2-2 includes a power-supplying coil 21, a power-supplying resonator 22, and a power-receiving resonator 32 as shown in FIG. 13. In the meanwhile, a power-receiving module 3 includes a power-receiving coil 31. The power-supplying coil 21, the power-supplying resonator 22, the power-receiving resonator 32, and the power-receiving coil 31 are structurally identical with those in Example 2-1.

In the standby state, as shown in FIG. 13, the input impedance of the power-supplying coil 21, the power-supplying resonator 22, and the power-receiving resonator 32 constituting the power-supplying module 2 was set at $Z_{in}$. Furthermore, in the power-supplying state, the input impedance in the power-supplying coil 21, the power-supplying resonator 22, and the power-receiving resonator 32 constituting the power-supplying module 2 and the power-receiving coil 31 constituting the power-receiving module 3 was set at $Z_{in}$.

In regard to the power-supplying module 2 and the power-receiving module 3 of Example 2-2, an analysis result of the input impedance $Z_{in}$ (indicated by a dotted line in FIG. 14) at the power-source frequency in the standby state and the input impedance $Z_{in}$ (indicated by a full line in FIG. 14) at the power-source frequency in the power-supplying state is shown in FIG. 14. According to the analysis result, power-source frequency bands in which the input impedance $Z_{in}$ (indicated by the dotted line in FIG. 14) of the power-supplying module 2 in the standby state was higher than the input impedance $Z_{in}$ (indicated by the full line in FIG. 14) of the power-supplying module 2 and the power-receiving module 3 in the power-supplying state were three bands, namely a band E1 of about 0.83 to 0.84MHz, a band E2 of about 0.98 to 1.02MHz, and a band A3 of about 1.30 to 1.35 MHz.

In Example 2-2, when the power-source frequency was set in the band E2, in particular at around 1.0MHz, the difference between the input impedance $Z_{in}$ of the power-supplying module 2 in the standby state and the input impedance $Z_{in}$ of the power-supplying module 2 and the power-receiving module 3 in the power-supplying state was maximized, and hence the power consumption of the power-supplying module 2 in the standby state was reduced. However, as described above, in the power-supplying module 2 and the power-receiving module 3 having the double-hump characteristic, as indicated by the full line 52 in FIG. 4, the transmission characteristic "S21" tends to be low in the resonance frequency band and hence the power transmission efficiency in the power-supplying state tends to be low. Furthermore, as described above, in the power-supplying module 2 and the power-receiving module 3 having the double-hump characteristic, as indicated by the full line 52 in FIG. 4, the transmission characteristic "S21" is maximized in a power-source frequency band (fL: in the in-phase resonance mode in the narrowest sense) lower than the resonance frequency fo and a power-source frequency band (fH: in the antiphase resonance mode in the narrowest sense) higher than the resonance frequency fo. Furthermore, because the band E1 (in particular around 0.84MHz) is included in the power-source frequency band in the in-phase resonance mode in the narrow sense and the band E3 (in particular around 1.32MHz) is included in the power-source frequency band in the antiphase resonance mode in the narrow sense, the power transmission efficiency in the power-supplying state is relatively high when the power-source frequency is set in the band E1 or in the band E3.

(Example 2-3)

A power-supplying module 2 of Example 2-3 includes a power-supplying coil 21 as shown in FIG. 15. In the meanwhile, a power-receiving module 3 includes a power-supplying resonator 22, a power-receiving resonator 32, and a power-receiving coil 31. The power-supplying coil 21, the power-supplying resonator 22, the power-receiving resonator 32, and the power-receiving coil 31 are structurally identical with those in Example 2-1.

In the standby state, as shown in FIG. 15, the input impedance in the power-supplying coil 21 constituting the power-supplying module 2 was set at $Z_{in}$. Furthermore, in the power-supplying state, the input impedance in the power-supplying coil 21 constituting the power-supplying module 2 and the power-supplying resonator 22, the power-receiving resonator 32, and the power-receiving coil 31 constituting the power-receiving module 3 was set at $Z_{in}$.

In regard to the power-supplying module 2 and the power-receiving module 3 of Example 2-3, an analysis result of the input impedance $Z_{in}$ (indicated by a dotted line in FIG. 16) at the power-source frequency in the standby state and the input impedance $Z_{in}$ (indicated by a full line in FIG. 16) at the power-source frequency in the power-supplying state is shown in FIG. 16. According to the analysis result, a power-source frequency band in which the input impedance $Z_{in}$ (indicated by the dotted line in FIG. 16) of the power-supplying module 2 in the standby state was higher than the input impedance $Z_{in}$ (indicated by the full line in FIG. 16) of the power-supplying module 2 and the power-receiving module 3 in the power-supplying state was a band F1 of about 0.86 to 1. 28MHz.

In Example 2-3, when the power-source frequency was set in the band F1, in particular at 1.0MHz, the difference between the input impedance $Z_{in}$ of the power-supplying module 2 in the standby state and the input impedance $Z_{in}$ of the power-supplying module 2 and the power-receiving module 3 in the power-supplying state was maximized, and hence the power consumption of the power-supplying module 2 in the standby state was minimized.

(Example 3-1)

As described above, in Example 3-1 to Example 4-3, the transmission characteristic "S21" with respect to the power-source frequency of the power supplied to the power-supplying module 2 and the power-receiving module 3 in the power-supplying state has a single-hump characteristic. To be more specific, a power-supplying module 2 and a power-receiving module 3 used in Example 3-1 to Example 4-3 are identical with those used in Example 1-1 to Example 2-3, except that the coupling coefficient $k_{23}$ between the coil $L_2$ in the power-supplying resonator 22 and the coil $L_3$ in the power-receiving resonator 32 is set at 0.03. (In other words, the coupling coefficient $k_{23}$ is varied so that the transmission characteristic "S21" has the single-hump characteristic).

A power-supplying module 2 of Example 3-1 includes a power-supplying coil 21 and a power-supplying resonator 22. In the meanwhile, a power-receiving module 3 includes a power-receiving resonator 32 and a power-receiving coil 31. Except that the coupling coefficient $k_{23}$ is set at 0.03 (i.e., was arranged to have the single-hump characteristic), Example 3-1 is identical with Example 1-1.

In regard to the power-supplying module 2 and the power-receiving module 3 of Example 3-1, an analysis result of the input impedance $Z_{in}$ (indicated by a dotted line in FIG. 17) at the power-source frequency in the standby state and the input impedance $Z_{in}$ (indicated by a full line in FIG. 17) at the power-source frequency in the power-supplying state is shown in FIG. 17. According to the analysis result, a power-source frequency band in which the input impedance $Z_{in}$ (indicated by the dotted line in FIG. 17) of the power-supplying module 2 in the standby state was higher than the input impedance $Z_{in}$ (indicated by the full line in FIG. 17) of the power-supplying module 2 and the power-receiving module 3 in the power-supplying state was a band G1 of about 0.99 to 1.01MHz.

In Example 3-1, when the power-source frequency was set in the band G1, in particular at around 1.0MHz (resonance frequency band), the difference between the input impedance $Z_{in}$ of the power-supplying module 2 in the standby state and the input impedance $Z_{in}$ of the power-supplying module 2 and the power-receiving module 3 in the power-supplying state was maximized, and hence the power consumption of the power-supplying module 2 in the standby state was minimized.

Furthermore, as described above, in the power-supplying module 2 and the power-receiving module 3 having the single-hump characteristic, as indicated by the dotted line 51 in FIG. 4, the transmission characteristic "S21" was maximized when the power-source frequency was at the resonance frequency $f_0$ (i.e. , the power transmission efficiency was maximized). On this account, in Example 3-1, when the power-source frequency is set in the band G1, in particular at around 1.0MHz (resonance frequency band), the transmission characteristic "S21" shows the highest value in the resonance frequency band, and hence the power transmission efficiency in the power-supplying state is increased.

(Example 3-2)

A power-supplying module 2 of Example 3-2 includes a power-supplying coil 21, a power-supplying resonator 22, and a power-receiving resonator 32. In the meanwhile, a power-receiving module 3 includes a power-receiving coil 31. As described above, except that the coupling coefficient $k_{23}$ is set at 0.03 (i.e., was arranged to have the single-hump characteristic), Example 3-1 is identical with Example 1-2.

In regard to the power-supplying module 2 and the power-receiving module 3 of Example 3-2, an analysis result of the input impedance $Z_{in}$ (indicated by a dotted line in FIG. 18) at the power-source frequency in the standby state and the input impedance $Z_{in}$ (indicated by a full line in FIG. 18) at the power-source frequency in the power-supplying state is shown in FIG. 18. According to the analysis result, power-source frequency bands in which the input impedance $Z_{in}$

(indicated by the dotted line in FIG. 18) of the power-supplying module 2 in the standby state was higher than the input impedance $Z_{in}$ (indicated by the full line in FIG. 18) of the power-supplying module 2 and the power-receiving module 3 in the power-supplying state were two bands, namely a band H1 of 0.96 to 0.98MHz and a band H2 of about 1.02 to 1.04MHz.

In Example 3-2, when the power-source frequency was set in the band H1 or in the band H2, there was a difference between the input impedance $Z_{in}$ of the power-supplying module 2 in the standby state and the input impedance $Z_{in}$ of the power-supplying module 2 and the power-receiving module 3 in the power-supplying state, and hence the power consumption of the power-supplying module 2 in the standby state was reduced.

(Example 3-3)

A power-supplying module 2 of Example 3-3 includes a power-supplying coil 21. In the meanwhile, a power-receiving module 3 includes a power-supplying resonator 22, a power-receiving resonator 32, and a power-receiving coil 31. As described above, except that the coupling coefficient $k_{23}$ is set at 0.03 (i.e., was arranged to have the single-hump characteristic), Example 3-1 is identical with Example 1-3.

In regard to the power-supplying module 2 and the power-receiving module 3 of Example 3-3, an analysis result of the input impedance $Z_{in}$ (indicated by a dotted line in FIG. 19) at the power-source frequency in the standby state and the input impedance $Z_{in}$ (indicated by a full line in FIG. 19) at the power-source frequency in the power-supplying state is shown in FIG. 19. According to the analysis result, power-source frequency bands in which the input impedance $Z_{in}$ (indicated by the dotted line in FIG. 19) of the power-supplying module 2 in the standby state was higher than the input impedance $Z_{in}$ (indicated by the full line in FIG. 19) of the power-supplying module 2 and the power-receiving module 3 in the power-supplying state were two bands, namely a band I1 of about 0.60 to 0.91MHz and a band I2 of about 1.13 to 1.5 (which was the upper limit of the analysis) MHz.

In Example 3-3, when the power-source frequency was set in the band I1 or in the band I2, there was a difference between the input impedance $Z_{in}$ of the power-supplying module 2 in the standby state and the input impedance $Z_{in}$ of the power-supplying module 2 and the power-receiving module 3 in the power-supplying state, and hence the power consumption of the power-supplying module 2 in the standby state was reduced.

However, as described above, in the power-supplying module 2 and the power-receiving module 3 having the single-hump characteristic, as indicated by the dotted line 51 in FIG. 4, the transmission characteristic "S21" tends to be high in the resonance frequency band and to be relatively low in other bands, hence the power transmission efficiency in the power-supplying state tends to be low.

(Example 4-1)

In Example 4-1 to Example 4-3, being different from Example 3-1 to Example 3-3, a capacitor $C_1$ of a RLC circuit (a resistor $R_1$, a coil $L_1$, and a capacitor $C_1$) constituting a power-supplying coil 21 in a power-supplying module 2 is connected in a parallel manner as in Example 2-1 to Example 2-3.

A power-supplying module 2 of Example 4-1 includes a power-supplying coil 21 and a power-supplying resonator 22. In the meanwhile, a power-receiving module 3 includes a power-receiving resonator 32 and a power-receiving coil 31.

Furthermore, as described above, the power-supplying coil 21 is a RLC circuit formed of a resistor $R_1$m a coil $L_1$, and a capacitor $C_1$, and the capacitor $C_1$ is connected in a parallel manner. Furthermore, in the same manner as Example 3-1, the coupling coefficient $k_{23}$ between the coil $L_2$ in the power-supplying resonator 22 and the coil $L_3$ in the power-receiving resonator 32 is set at 0.03 (i.e., set in the single-hump). The arrangements other than the above are identical with those of Example 3-1.

In regard to the power-supplying module 2 and the power-receiving module 3 of Example 4-1, an analysis result of the input impedance $Z_{in}$ (indicated by a dotted line in FIG. 20) at the power-source frequency in the standby state and the input impedance $Z_{in}$ (indicated by a full line in FIG. 20) at the power-source frequency in the power-supplying state is shown in FIG. 20. According to the analysis result, power-source frequency bands in which the input impedance $Z_{in}$ (indicated by the dotted line in FIG. 20) of the power-supplying module 2 in the standby state was higher than the input impedance $Z_{in}$ (indicated by the full line in FIG. 20) of the power-supplying module 2 and the power-receiving module 3 in the power-supplying state were two bands, namely a band J1 of about 0.88 to 0.99MHz and a band J2 of about 1.06 to 1.19MHz. In FIG. 20, to supplement the graph, numerical data of the input impedance $Z_{in}$ at the power-source frequency in the power-supplying state and the input impedance $Z_{in}$ at the power-source frequency in the standby state in the band J1 and the band J2 is described.

In Example 4-1, when the power-source frequency was set in the band J1 or in the band J2, there was a difference between the input impedance $Z_{in}$ of the power-supplying module 2 in the standby state and the input impedance $Z_{in}$ of the power-supplying module 2 and the power-receiving module 3 in the power-supplying state, and hence the power consumption of the power-supplying module 2 in the standby state was reduced.

(Example 4-2)

A power-supplying module 2 of Example 4-2 includes a power-supplying coil 21, a power-supplying resonator 22, and a power-receiving resonator 32. In the meanwhile, a power-receiving module 3 includes a power-receiving coil 31. The power-supplying coil 21, the power-supplying resonator 22, the power-receiving resonator 32, and the power-receiving coil 31 are structurally identical with those in Example 4-1.

In regard to the power-supplying module 2 and the power-receiving module 3 of Example 4-2, an analysis result of the input impedance $Z_{in}$ (indicated by a dotted line in FIG. 21) at the power-source frequency in the standby state and the input impedance $Z_{in}$ (indicated by a full line in FIG. 21) at the power-source frequency in the power-supplying state is shown in FIG. 21. According to the analysis result, power-source frequency bands in which the input impedance $Z_{in}$ (indicated by the dotted line in FIG. 21) of the power-supplying module 2 in the standby state was higher than the input impedance $Z_{in}$ (indicated by the full line in FIG. 21) of the power-supplying module 2 and the power-receiving module 3 in the power-supplying state were three bands, namely a band K1 of about 0.87 to 0.88MHz, a band K2 of about 1.00 to 1.03MHz, and a band K3 of about 1.19 to 1.21 MHz.

In Example 4-2, when the power-source frequency was set in the band K1, the band K2 or the band K3, there was a difference between the input impedance $Z_{in}$ of the power-supplying module 2 in the standby state and the input impedance $Z_{in}$ of the power-supplying module 2 and the power-receiving module 3 in the power-supplying state, and hence the power consumption of the power-supplying module 2 in the standby state was reduced.

(Example 4-3)

A power-supplying module 2 of Example 4-3 includes a power-supplying coil 21. In the meanwhile, a power-receiving module 3 includes a power-supplying resonator 22, a power-receiving resonator 32, and a power-receiving coil 31. The power-supplying coil 21, the power-supplying resonator 22, the power-receiving resonator 32, and the power-receiving coil 31 are structurally identical with those in Example 4-1.

In regard to the power-supplying module 2 and the power-receiving module 3 of Example 4-3, an analysis result of the input impedance $Z_{in}$ (indicated by a dotted line in FIG. 22) at the power-source frequency in the standby state and the input impedance $Z_{in}$ (indicated by a full line in FIG. 22) at the power-source frequency in the power-supplying state is shown in FIG. 22. According to the analysis result, a power-source frequency band in which the input impedance $Z_{in}$ (indicated by the dotted line in FIG. 22) of the power-supplying module 2 in the standby state was higher than the input impedance $Z_{in}$ (indicated by the full line in FIG. 22) of the power-supplying module 2 and the power-receiving module 3 in the power-supplying state was a band L1 of about 0.92 to 1.14MHz.

In Example 3-1, when the power-source frequency was set in the band L1, in particular at around 1.0MHz (resonance frequency band), the difference between the input impedance $Z_{in}$ of the power-supplying module 2 in the standby state and the input impedance $Z_{in}$ of the power-supplying module 2 and the power-receiving module 3 in the power-supplying state was maximized, and hence the power consumption of the power-supplying module 2 in the standby state was minimized. Furthermore, as described above, in the power-supplying module 2 and the power-receiving module 3 having the single-hump characteristic, as indicated by the dotted line 51 in FIG. 4, the transmission characteristic "S21" shows the highest value in the resonance frequency band, and hence the power transmission efficiency in the power-supplying state is increased.

As explained in Example 1-1 to Example 4-3 above, the power-supplying module 2 of the present embodiment is arranged such that the input impedance $Z_{in}$ of the power-supplying module 2 in the standby state is higher than the input impedance $Z_{in}$ of the power-supplying module 2 and the power-receiving module 3 in the power-supplying state, and driving is performed with a power-source frequency band with which the input impedance $Z_{in}$ of the power-supplying module 2 in the standby state is higher than the input impedance $Z_{in}$ of the power-supplying module 2 and the power-receiving module 3 in the power-supplying state. Because in this arrangement the input impedance $Z_{in}$ of the power-supplying module 2 in the standby state is higher than the input impedance $Z_{in}$ of the power-supplying module 2 and the power-receiving module 3 in the power-supplying state, the power consumption of the power-supplying module 2 in the standby state is arranged to be restrained as compared to the power consumption in the power-supplying state.

Examples of elements (parameters) with which the power-supplying module 2 and the power-receiving module 3 are arranged so that the input impedance $Z_{in}$ of the power-supplying module 2 in the standby state is higher than the input impedance $Z_{in}$ of the power-supplying module 2 and the power-receiving module 3 in the power-supplying state include the resistance value, inductance, and capacity of $R_1$, $L_1$, and $C_1$ of the RLC circuit of the power-supplying coil 21, the resistance value, inductance, and capacity of $R_2$, $L_2$, and $C_2$ of the RLC circuit of the power-supplying resonator 22, the resistance value, inductance, and capacity of $R_3$, $L_3$, and $C_3$ of the RLC circuit of the power-receiving resonator 32, the resistance value, inductance, and capacity of $R_4$, $L_4$, and $C_4$ of the RLC circuit of the power-receiving coil 31, the coupling coefficients $k_{12}$, $k_{23}$, and $k_{34}$, and load impedance (load resistance). Furthermore, whether the RLC circuit in each of the power-supplying coil 21, the power-supplying resonator 22, the power-receiving resonator 32, and the power-receiving coil 31 is connected in a serial manner or in a parallel manner and whether the capacitor is connected or not are also elements (parameters).

Furthermore, which one or more of the power-supplying coil 21, the power-supplying resonator 22, and the power-receiving resonator 32 is included in the power-supplying module 2 is also an element (parameter).

In addition to the above, according to Example 1-2, Example 2-2, Example 3-2, and Example 4-2, the input impedance $Z_{in}$ of the power-supplying module 2 in the standby state can be used as the input impedance of the power-supplying module 2 including the power-supplying coil 21, the power-supplying resonator 22, and the power-receiving resonator 32.

According to this arrangement, because the power-supplying module 2 is formed of at least three elements, i.e., the power-supplying coil 21, the power-supplying resonator 22, and the power-receiving resonator 32, the number of the elements for determining the input impedance $Z_{in}$ of the power-supplying module 2 is large. When the number of the elements for determining the input impedance $Z_{in}$ of the power-supplying module 2 is large, the number of the elements for determining the relationship of the input impedance $Z_{in}$ of the power-supplying module 2 with the power-source frequency of the AC power source 6 is also large, with the result that the design freedom of the power-supplying module 2 is enhanced. In addition to the above, because the power-receiving module 3 is arranged to include the power-receiving coil 31, the downsizing of the power-receiving module 3 is realized.

In addition to the above, according to Example 1-1, Example 2-1, Example 3-1, and Example 4-1, the input impedance $Z_{in}$ of the power-supplying module 2 in the standby state can be used as the input impedance $Z_{in}$ of the power-supplying module 2 including the power-supplying coil 21 and the power-supplying resonator 22.

According to this arrangement, because the power-supplying module 2 is formed of at least two elements, i.e., the power-supplying coil 21 and the power-supplying resonator 22, the number of the elements for determining the input impedance $Z_{in}$ of the power-supplying module 2 is large. When the number of the elements for determining the input impedance $Z_{in}$ of the power-supplying module 2 is large, the number of the elements for determining the relationship of the input impedance $Z_{in}$ of the power-supplying module 2 with the power-source frequency of the AC power source 6 is also large, with the result that the design freedom of the power-supplying module 2 is enhanced. In addition to the above, because the power-receiving module 3 is arranged to include the power-receiving resonator 32 and the power-receiving coil 31, the downsizing of the power-receiving module 3 is realized.

In addition to the above, according to Example 1-3, Example 2-3, Example 3-3, and Example 4-3, the input impedance $Z_{in}$ of the power-supplying module 2 in the standby state can be used as the input impedance $Z_{in}$ of the power-supplying coil 21.

According to this arrangement, because the power-supplying module 2 is formed mainly of one element, i.e., the power-supplying coil 21, the element for determining the input impedance $Z_{in}$ of the power-supplying module 2 is unified. When the element for determining the input impedance $Z_{in}$ of the power-supplying module 2 is unified, the element for determining the relationship of the input impedance $Z_{in}$ of the power-supplying module 2 with the power-source frequency of the AC power source 6 is also unified, with the result that the design of the power-supplying module 2 is simplified.

(Design Method)

Now, a design method (adjustment) which is one process in the manufacturing of the power-supplying module 2 and the power-receiving module 3 will be described with reference to FIG. 23.

What are designed by this design method are a charger 101 including the power-supplying module 2 and a wireless headset 102 including the power-receiving module 3, which are shown in FIG. 1.

To begin with, as shown in FIG. 23, the power reception amount of the power-receiving module 3 is determined based on the capacity of the rechargeable battery 9 and the charging current required to charge the rechargeable battery 9 (S1).

Next, the distance between the power-supplying resonator 22 and the power-receiving resonator 32 is determined (S2). The distance is the distance d23 between the power-supplying resonator 22 and the power-receiving resonator 32, while the wireless headset 102 having therein the power-receiving module 3 is placed on the charger 101 having therein the power-supplying module 2, i.e., during the power-supplying state. To be more specific, the distance d23 between the power-supplying resonator 22 and the power-receiving resonator 32 is determined, taking into account the shapes and the structures of the wireless headset 102 and the charger 101.

In addition to the above, based on the size, shape, and structure of each of the wireless headset 102 and the charger 101, the coil diameters of the power-supplying coil 21, the power-supplying resonator 22, the power-receiving coil 31, and the power-receiving resonator 32 are determined (S3).

Through the steps of S2 and S3, the coupling coefficient $K_{23}$ and the power transmission efficiency between the power-supplying resonator 22 (coil $L_2$) and the power-receiving resonator 32 (coil $L_3$) are determined.

Based on the power reception amount of the power-receiving module 3 determined in S1 and on the power transmission efficiency determined through S2 to S3, the minimum power supply amount required for the power-supplying module 2 is determined (S4).

Furthermore, based on the power reception amount of the power-receiving module 3, the power transmission efficiency, and the minimum power supply amount required by the power-supplying module 2 , a design value of the input impedance $Z_{in}$ of the power-supplying module 2 and the power-receiving module 3 in the power-supplying state is determined (S5).

In addition to the above, based on the design value of the input impedance $Z_{in}$ of the power-supplying module 2 and the power-receiving module 3 in the power-supplying state, which has been determined in S5, the elements (parameters) are determined so that the input impedance $Z_{in}$ of the power-supplying module 2 in the standby state is higher than the input impedance $Z_{in}$ of the power-supplying module 2 and the power-receiving module 3 in the power-supplying state.

Examples of elements (parameters) with which the power-supplying module 2 and the power-receiving module 3 are arranged so that the input impedance $Z_{in}$ of the power-supplying module 2 in the standby state is higher than the input impedance $Z_{in}$ of the power-supplying module 2 and the power-receiving module 3 in the power-supplying state include the resistance value, inductance, and capacity of $R_1$, $L_1$, and $C_1$ of the RLC circuit of the power-supplying coil 21, the resistance value, inductance, and capacity of $R_2$, $L_2$, and $C_2$ of the RLC circuit of the power-supplying resonator 22, the resistance value, inductance, and capacity of $R_3$, $L_3$, and $C_3$ of the RLC circuit of the power-receiving resonator 32, the resistance value, inductance, and capacity of $R_4$, $L_4$, and $C_4$ of the RLC circuit of the power-receiving coil 31, the coupling coefficients $k_{12}$, $k_{23}$, and $k_{34}$, and load impedance (load resistance). Furthermore, whether the RLC circuit in each of the power-supplying coil 21, the power-supplying resonator 22, the power-receiving resonator 32, and the power-receiving coil 31 is connected in a serial manner or in a parallel manner and whether the capacitor is connected or not are also elements (parameters).

Furthermore, which one or more of the power-supplying coil 21, the power-supplying resonator 22, and the power-receiving resonator 32 is included in the power-supplying module 2 is also an element (parameter).

According to the method above, because the input impedance $Z_{in}$ of the power-supplying module 2 in the standby state is higher than the input impedance $Z_{in}$ of the power-supplying module 2 and the power-receiving module 3 in the power-supplying state, the power consumption of the power-supplying module 2 in the standby state is reduced as compared to the power consumption in the power-supplying state.

(Other Embodiments)

Although the above description of the manufacturing method deals with the wireless headset 102 as an example, the method is applicable to any devices having a rechargeable battery; e.g., tablet PCs, digital cameras, mobile phone phones, earphone-type music player, hearing aids, and sound collectors.

Further, the above description deals with a power-receiving module 3 in which the power-supplied electronic device 10 includes a rechargeable battery 9; however, it is possible to adopt, as the power-supplied electronic device 10, a machine that directly consumes power for its operation.

Further, although the above description assumes the power-supplying module 2 and the power-receiving module 3 are mounted in a portable electronic device, the use of such modules is not limited to small devices. For Example, with a modification to the specifications according to the required power amount, the power-supplying module 2 and the power-receiving module 3 are mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the Examples as described above and can be applied to the other embodiments and Examples, and the applicable scope should be construed as broadly as possible.

Furthermore, the terms and phraseology used in the specification have been used to correctly illustrate the present invention, not to limit it. Further, it will be obvious for those skilled in the art that the other structures, systems, methods or the like are possible, within the spirit of the invention described in the present specification.

Accordingly, it should be considered that claims cover equivalent structures, too, without departing from the technical idea of the present invention. In addition, it is desirable to sufficiently refer to already-disclosed documents and the like, in order to fully understand the objects and effects of the present invention.

[Reference Signs List]

2 POWER-SUPPLYING MODULE

| | |
|---|---|
| 3 | POWER-RECEIVING MODULE |
| 6 | AC POWER SOURCE |
| 7 | STABILIZER CIRCUIT |
| 8 | CHARGING CIRCUIT |
| 9 | RECHARGEABLE BATTERY |
| 10 | POWER-SUPPLIED ELECTRONIC DEVICE |
| 11 | VARIABLE RESISTOR |
| 21 | POWER-SUPPLYING COIL |
| 22 | POWER-SUPPLYING RESONATOR |
| 31 | POWER-RECEIVING COIL |
| 32 | POWER-RECEIVING RESONATOR |
| 102 | WIRELESS HEADSET |
| 101 | CHARGER |

## Claims

1. A power-supplying module for supplying power from the power-supplying module connected with a power source to a power-receiving module by utilizing resonance phenomenon, the power-supplying module being driven at a power-source frequency of the power source so that an input impedance of the power-supplying module in a standby state in which no power is supplied from the power-supplying module to the power-receiving module is higher than an input impedance of the power-supplying module and the power-receiving module in a power-supplying state in which the power is supplied from the power-supplying module to the power-receiving module.

2. The power-supplying module according to claim 1, comprising a power-supplying coil, a power-supplying resonator, and a power-receiving resonator,
the power-receiving module including a power-receiving coil, and
the power being supplied by utilizing the resonance phenomenon occurring between the power-supplying resonator and the power-receiving resonator.

3. The power-supplying module according to claim 1, wherein, the power-supplying module includes a power-supplying coil and a power-supplying resonator,
the power-receiving module includes a power-receiving resonator and a power-receiving coil, and
the power is supplied by utilizing the resonance phenomenon occurring between the power-supplying resonator and the power-receiving resonator.

4. The power-supplying module according to claim 1, wherein, the power-supplying module includes a power-supplying coil, the power-receiving module includes a power-supplying resonator, a power-receiving resonator, and a power-receiving coil, and
the power is supplied by utilizing the resonance phenomenon occurring between the power-supplying resonator and the power-receiving resonator.

5. A power-supplying method for a power-supplying module for supplying power from the power-supplying module connected with a power source to a power-receiving module by utilizing resonance phenomenon, comprising the step of:

   adjusting a power-source frequency of the power source to a band in which an input impedance of the power-supplying module in a standby state in which no power is supplied from the power-supplying module to the power-receiving module is higher than an input impedance of the power-supplying module and the power-receiving module in a power-supplying state in which the power is supplied from the power-supplying module to the power-receiving module.

FIG.1

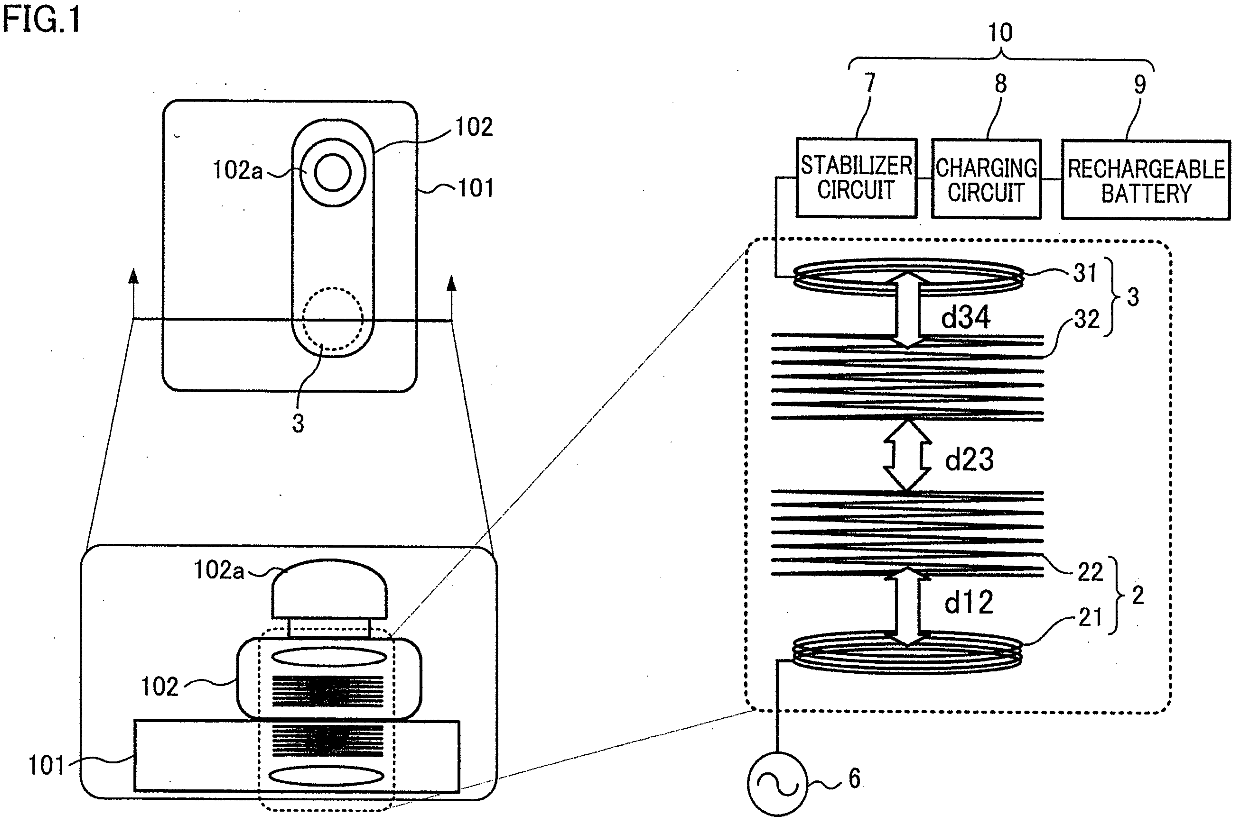
10
7
8
9
102
102a
101
STABILIZER CIRCUIT
CHARGING CIRCUIT
RECHARGEABLE BATTERY
31
32
3
d34
d23
22
2
d12
21
6
102a
102
101

FIG.2

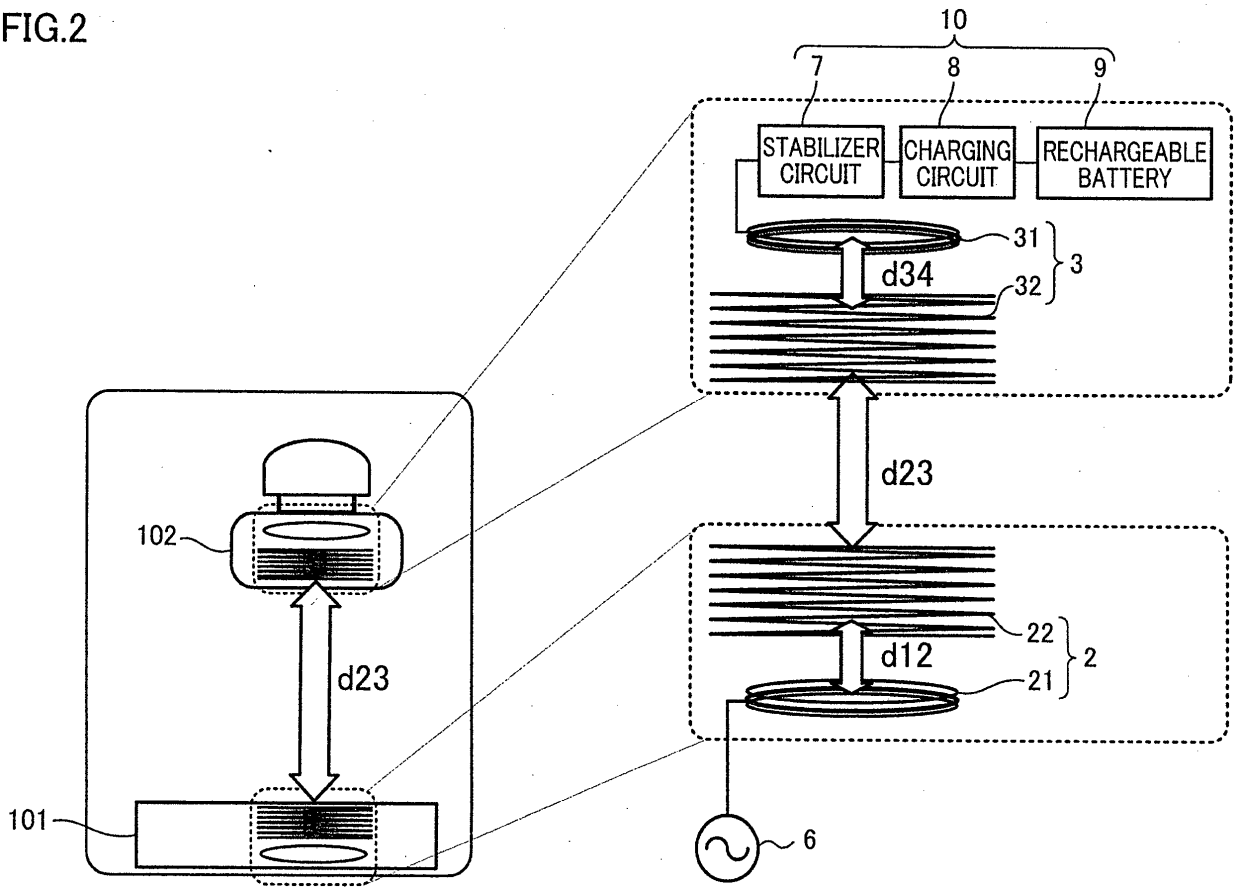
10
7
8
9
STABILIZER CIRCUIT
CHARGING CIRCUIT
RECHARGEABLE BATTERY
31
d34
32
3
d23
22
d12
2
21
6
102
d23
101

FIG.3

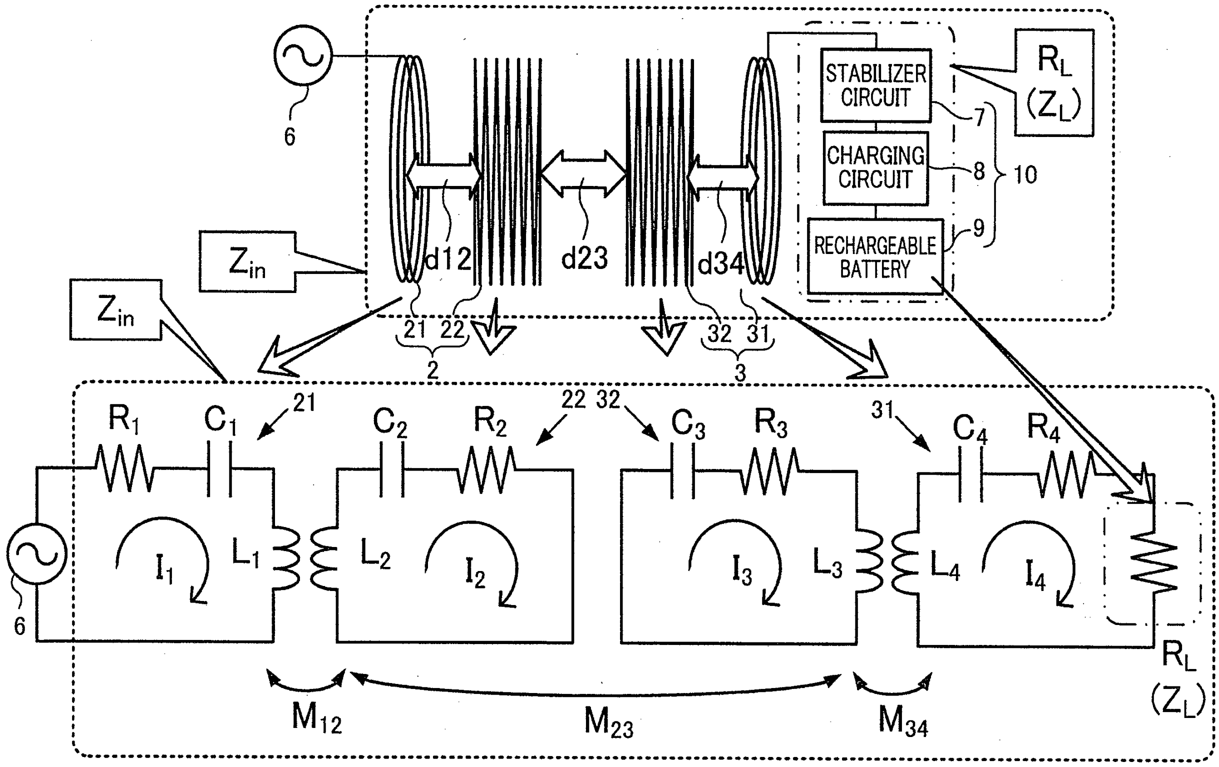
6
STABILIZER CIRCUIT
CHARGING CIRCUIT
RECHARGEABLE BATTERY
7
8
9
10
R_L (Z_L)
Z_in
Z_in
d12
d23
d34
21 22
2
32 31
3
R1 C1 21
C2 R2 22 32
C3 R3
31 C4 R4
I1 L1 L2 I2
I3 L3 L4 I4
6
R_L (Z_L)
M12
M23
M34

FIG.4

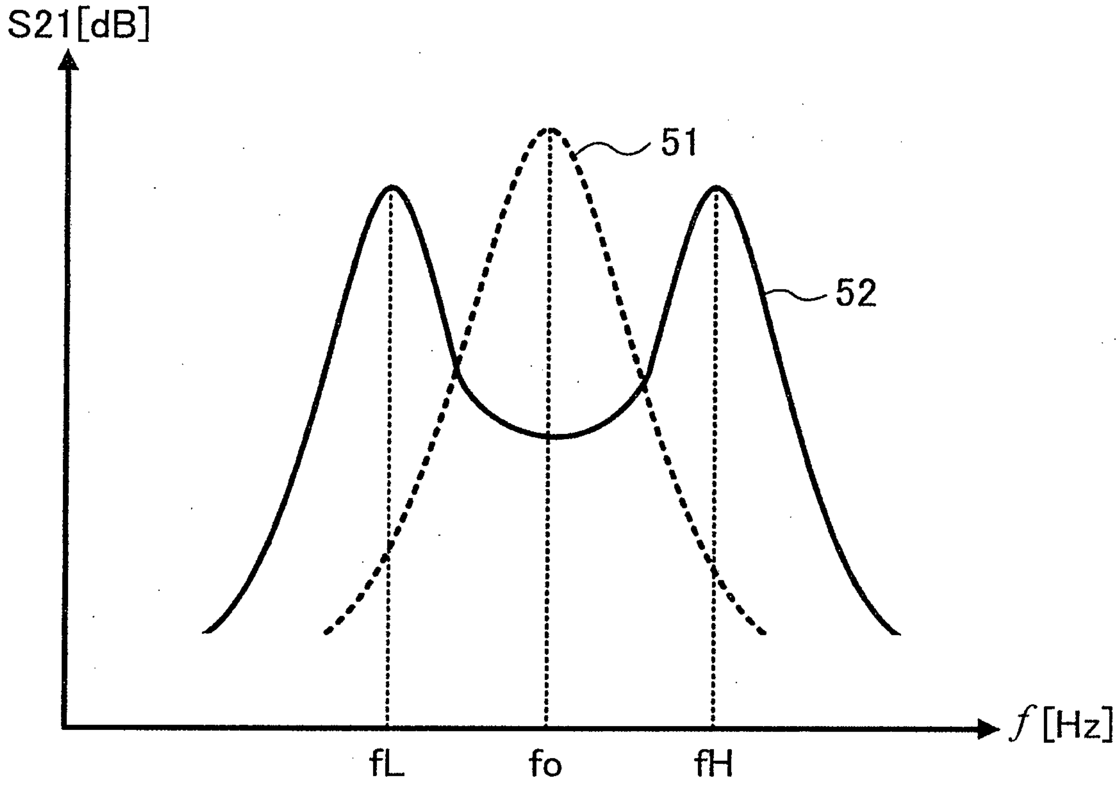

FIG.5

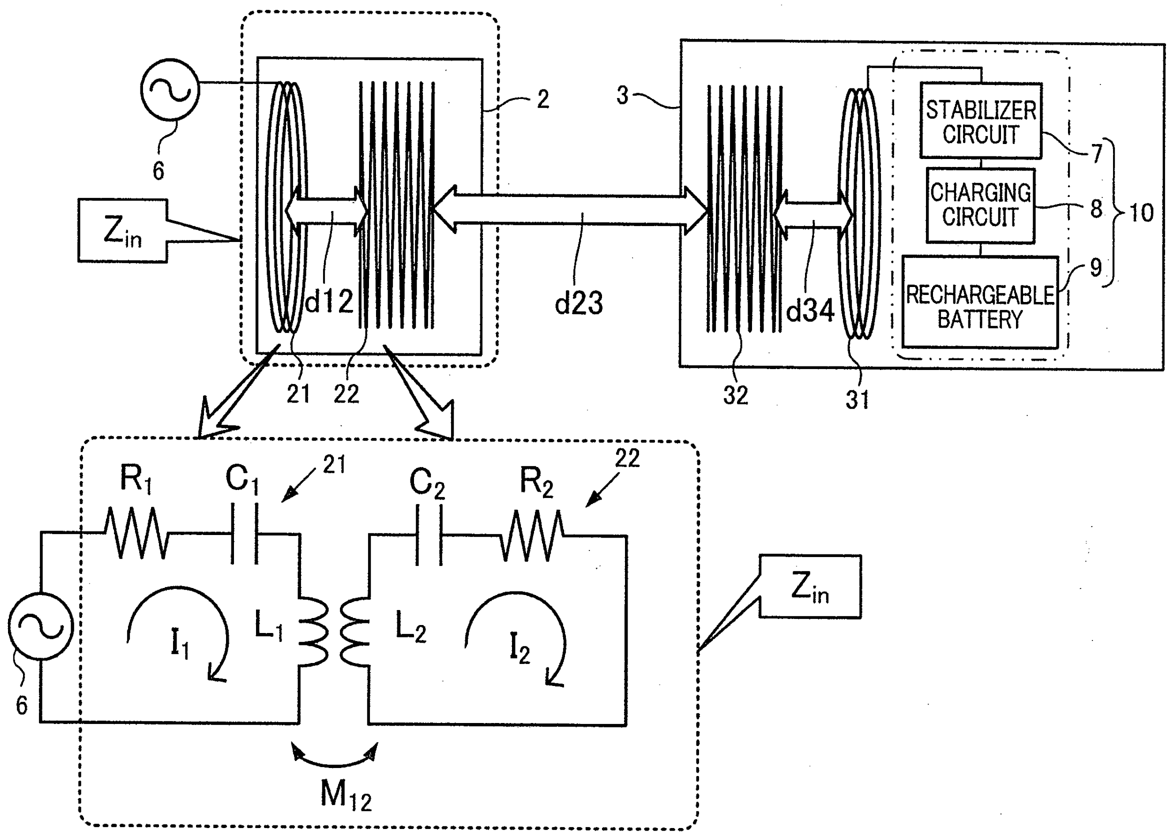
6
Zin
d12
21
22
2
d23
3
STABILIZER CIRCUIT
CHARGING CIRCUIT
RECHARGEABLE BATTERY
7
8
9
10
d34
32
31
R1
C1
21
C2
R2
22
I1
L1
L2
I2
6
Zin
M12

FIG.6

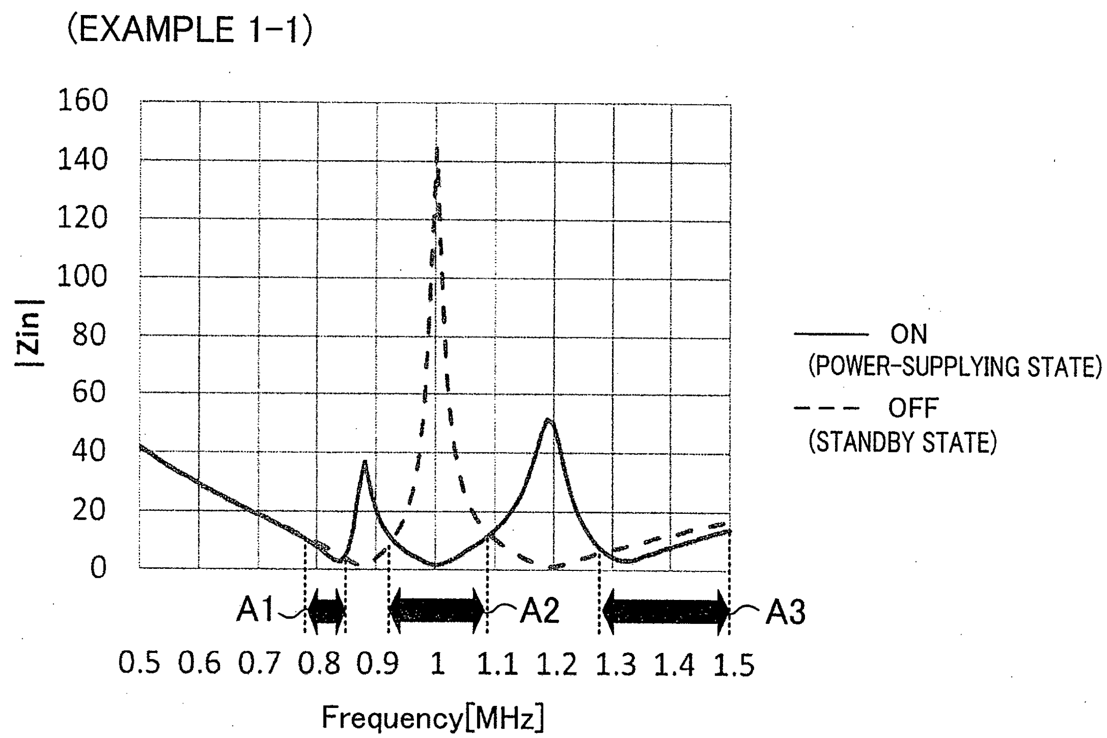
(EXAMPLE 1-1)
160
140
120
100
80
60
40
20
0
|Zin|
ON
(POWER-SUPPLYING STATE)
OFF
(STANDBY STATE)
A1
A2
A3
0.5 0.6 0.7 0.8 0.9 1 1.1 1.2 1.3 1.4 1.5
Frequency[MHz]

FIG.7

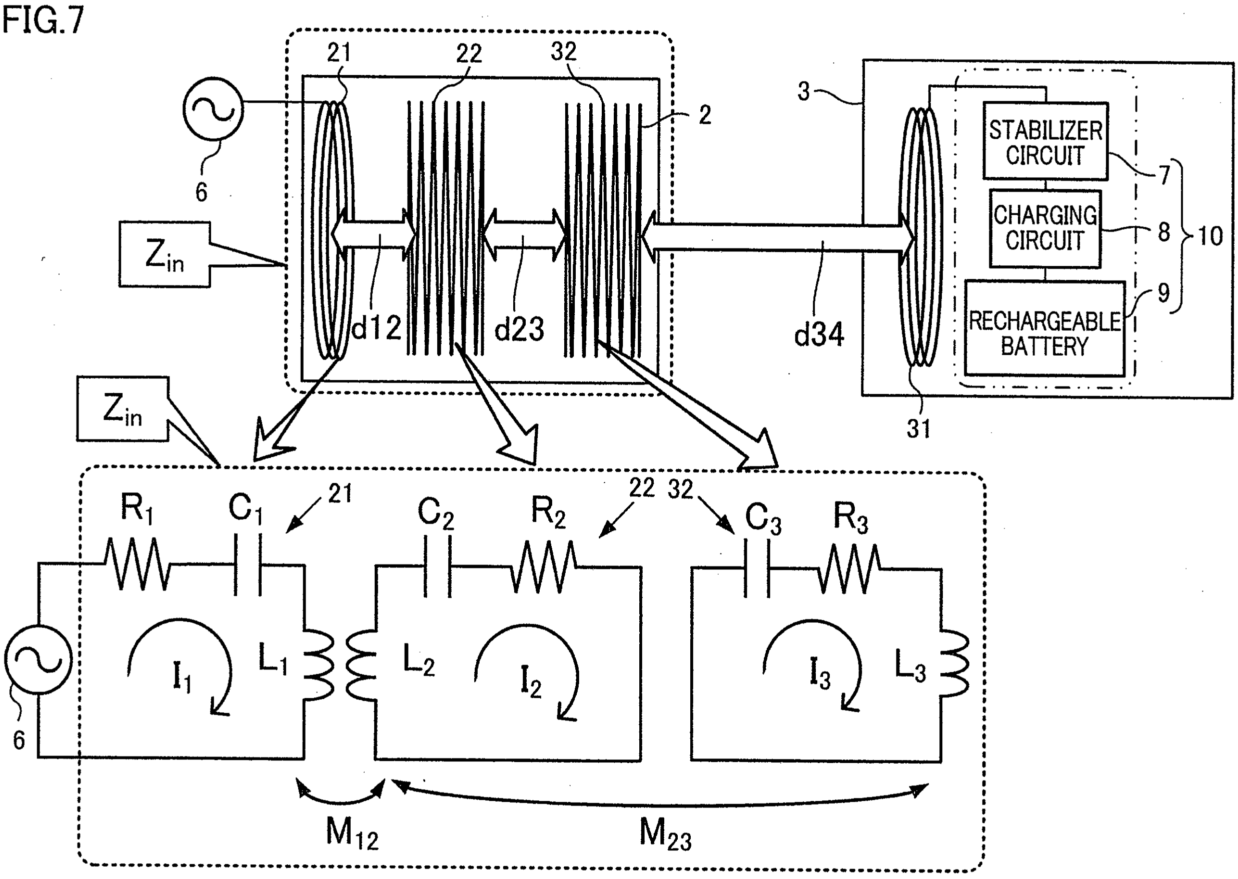
21
22
32
2
3
6
STABILIZER CIRCUIT
CHARGING CIRCUIT
RECHARGEABLE BATTERY
7
8
9
10
$Z_{in}$
d12
d23
d34
31
$Z_{in}$
$R_1$
$C_1$
21
$C_2$
$R_2$
22
32
$C_3$
$R_3$
$L_1$
$I_1$
$L_2$
$I_2$
$I_3$
$L_3$
6
$M_{12}$
$M_{23}$

FIG.8

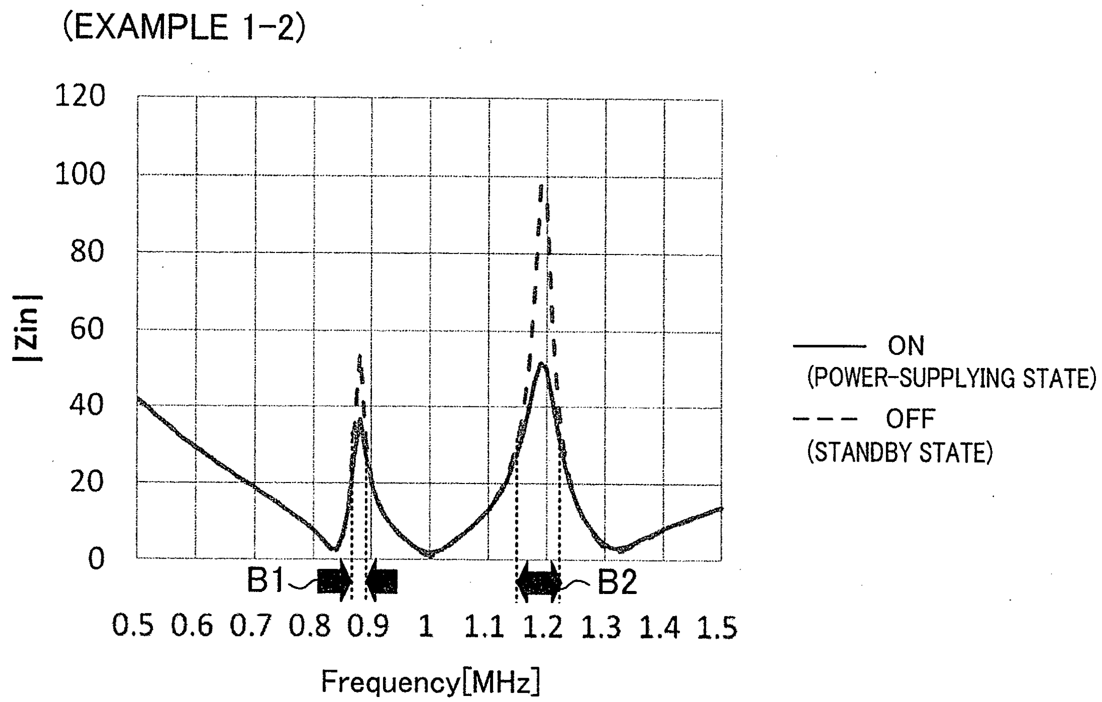
(EXAMPLE 1-2)
120
100
80
60
40
20
0
|Zin|
B1
B2
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.9

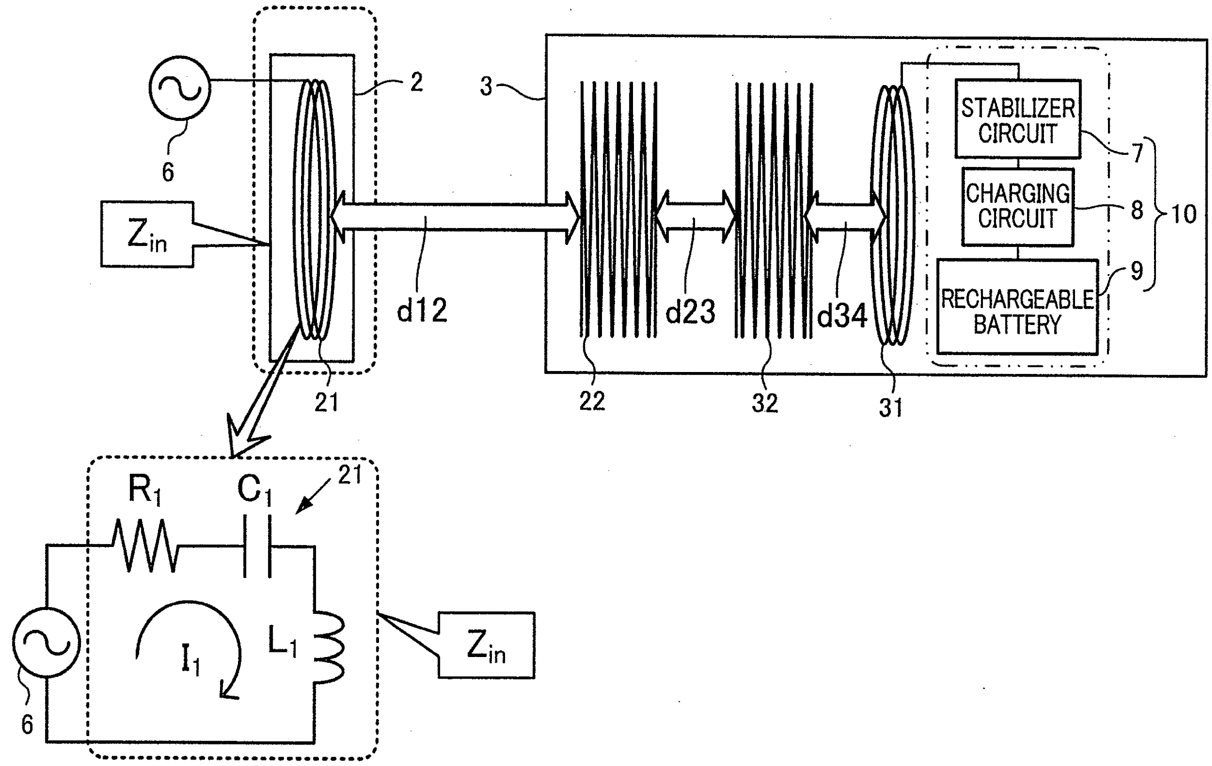
2
3
6
Zin
d12
d23
d34
STABILIZER CIRCUIT
CHARGING CIRCUIT
RECHARGEABLE BATTERY
7
8
9
10
21
22
32
31
R1
C1
L1
I1
Zin
6
21

FIG.10

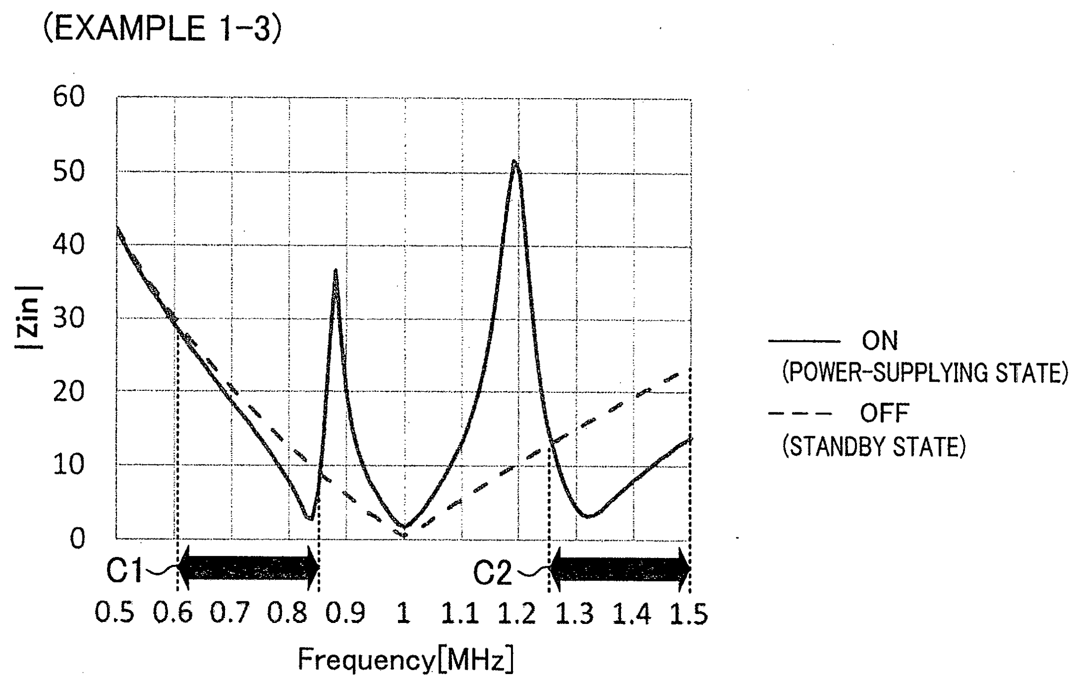
(EXAMPLE 1-3)
60
50
40
30
20
10
0
|Zin|
C1
C2
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.11

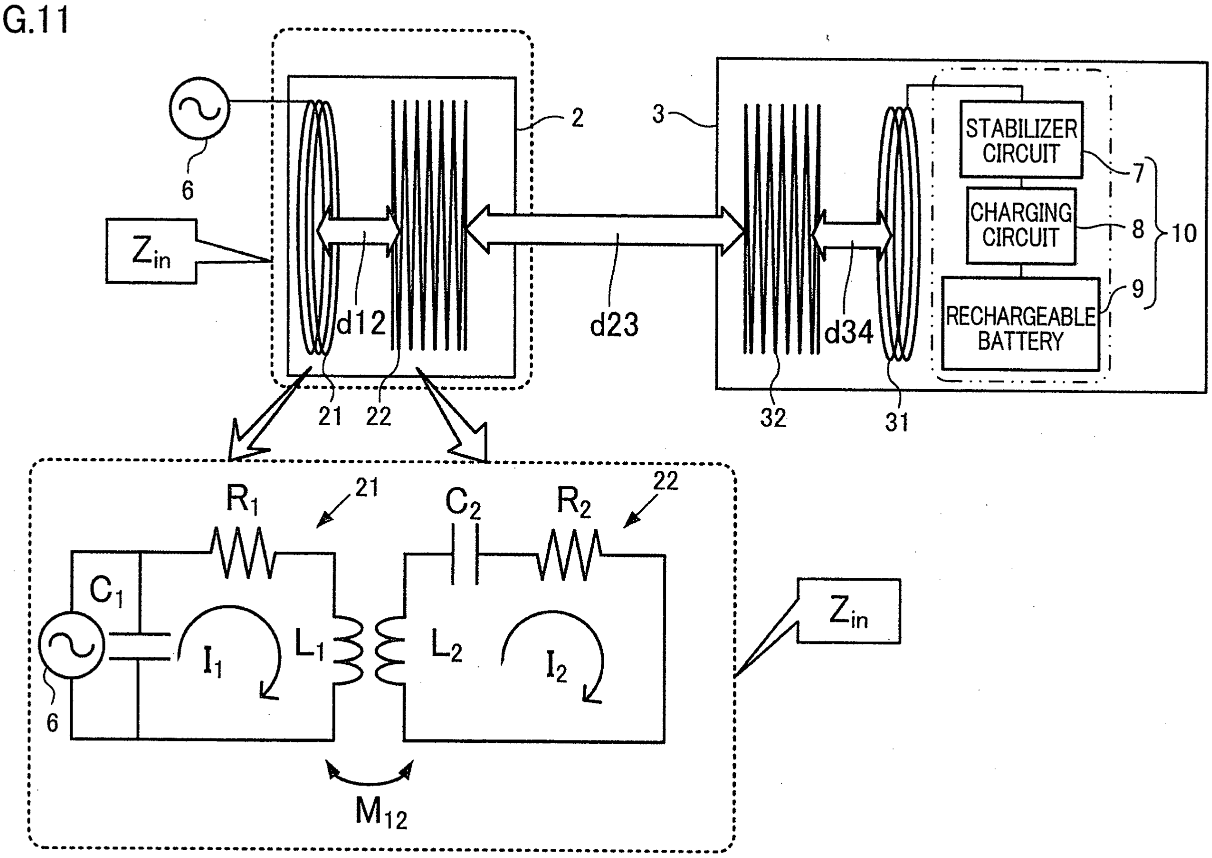

6
Zin
2
21
22
d12
d23
3
32
31
d34
STABILIZER CIRCUIT
CHARGING CIRCUIT
RECHARGEABLE BATTERY
7
8
9
10
R1
C1
I1
L1
L2
C2
R2
I2
M12
21
22
6
Zin

FIG.12

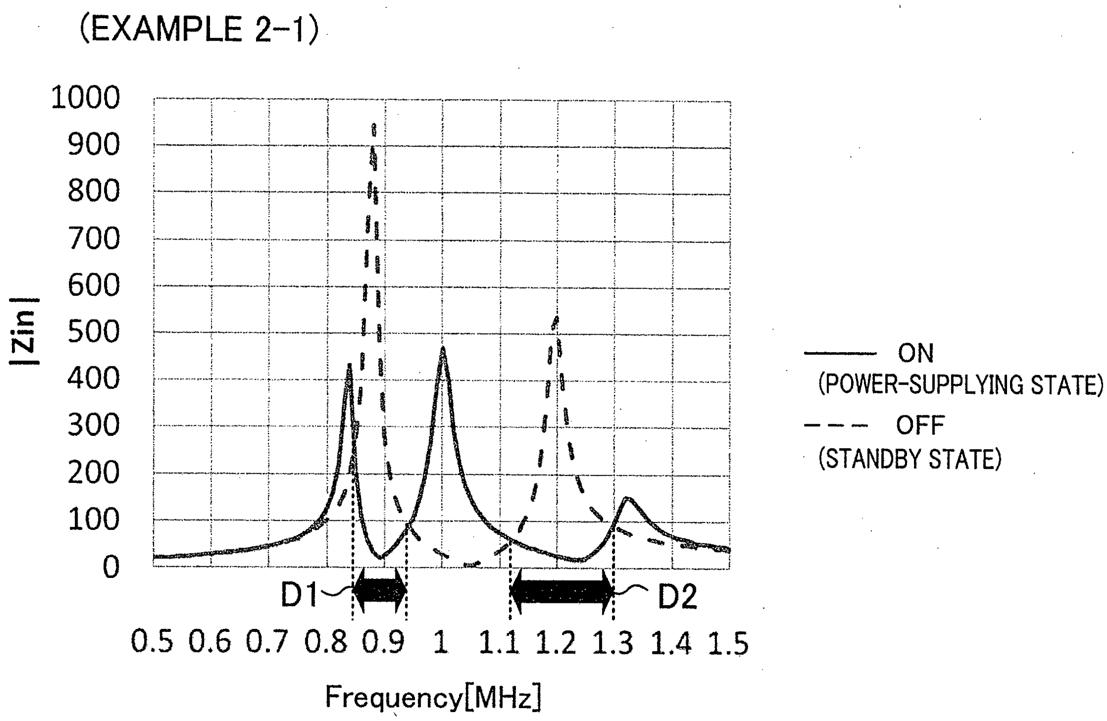
(EXAMPLE 2-1)
1000
900
800
700
600
500
400
300
200
100
0
|Zin|
D1
D2
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.13

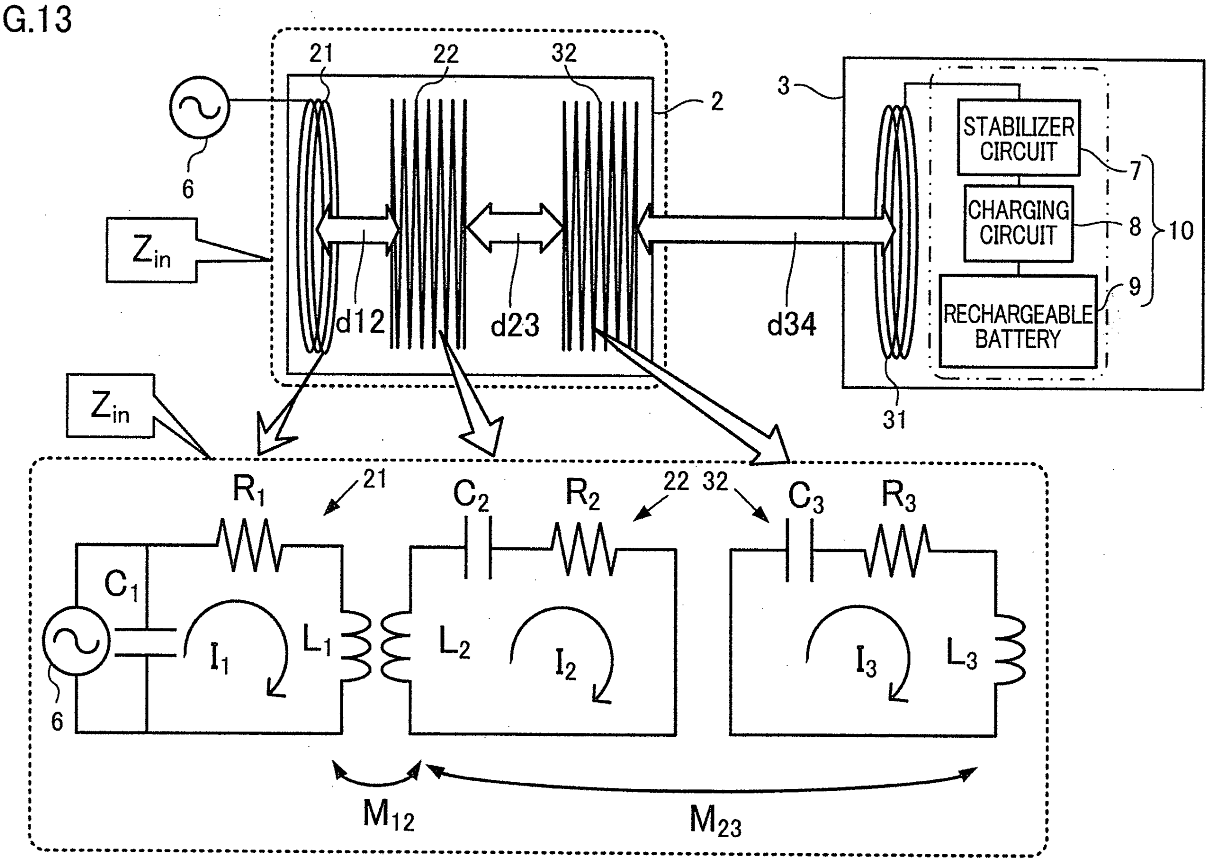
21
22
32
2
3
6
$Z_{in}$
d12
d23
d34
STABILIZER CIRCUIT
CHARGING CIRCUIT
RECHARGEABLE BATTERY
7
8
9
10
31
$Z_{in}$
$R_1$
21
$C_2$
$R_2$
22
32
$C_3$
$R_3$
$C_1$
$I_1$
$L_1$
$L_2$
$I_2$
$I_3$
$L_3$
6
$M_{12}$
$M_{23}$

FIG.14

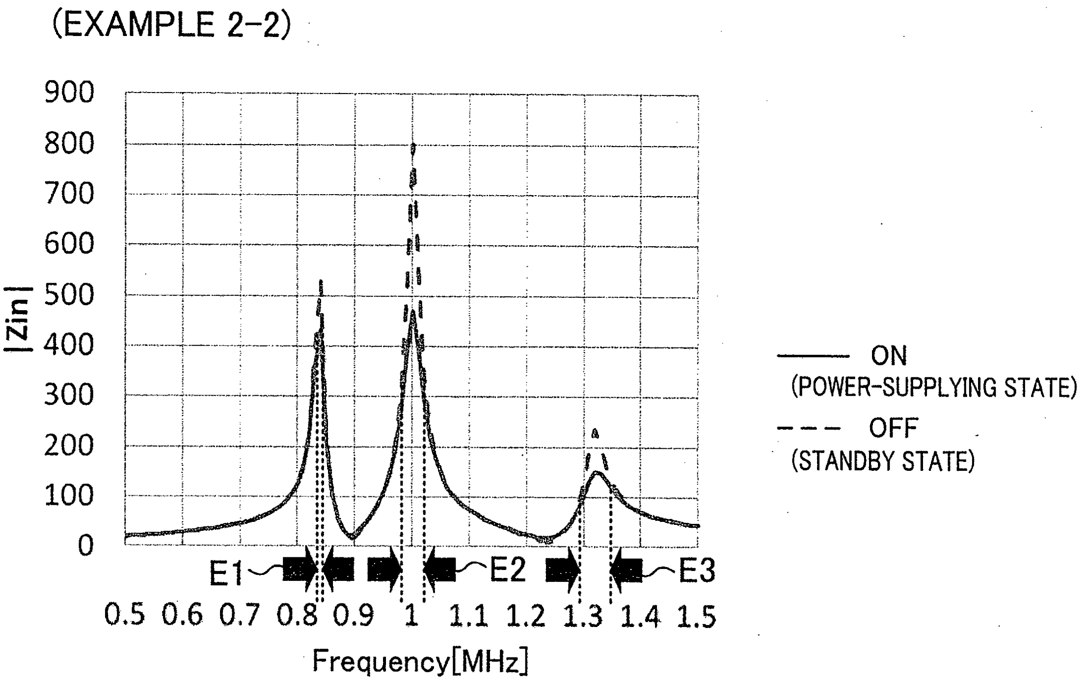
(EXAMPLE 2-2)
900
800
700
600
500
400
300
200
100
0
|Zin|
E1
E2
E3
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.15

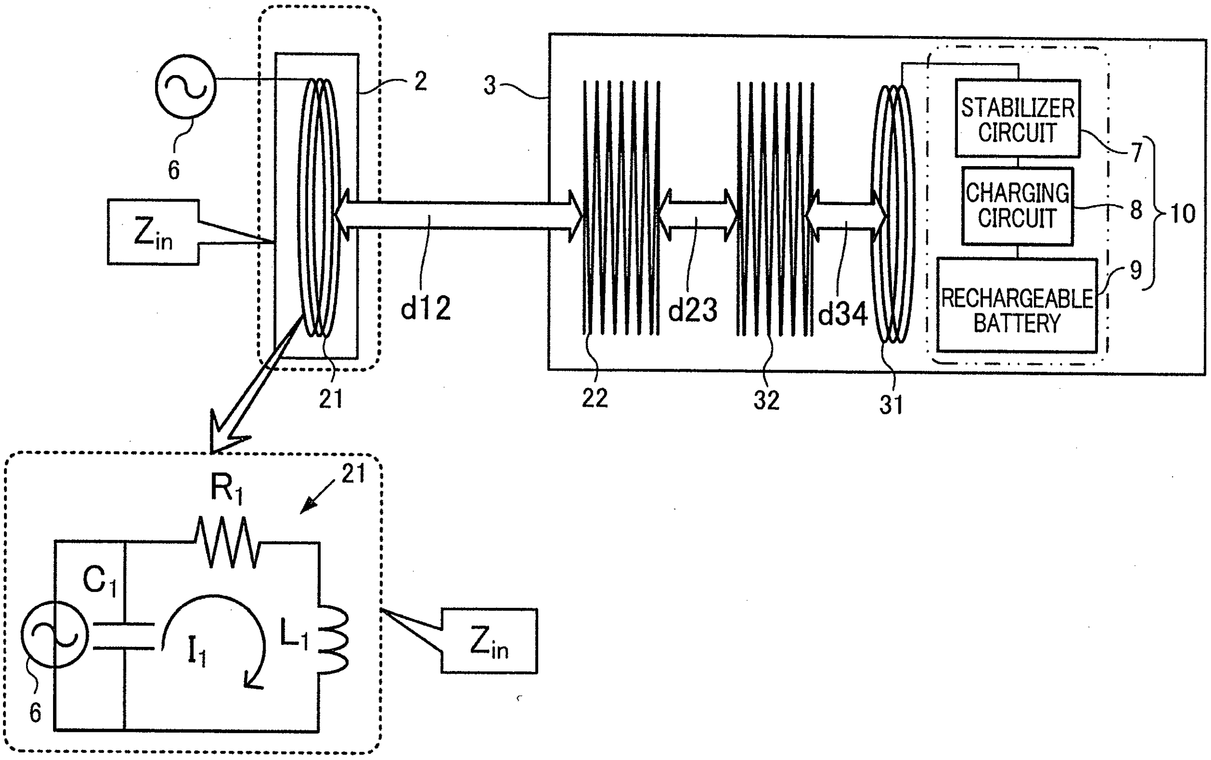
2
3
6
Z_in
d12
d23
d34
STABILIZER CIRCUIT
CHARGING CIRCUIT
RECHARGEABLE BATTERY
7
8
9
10
21
22
32
31
R1
C1
I1
L1
6
Z_in

FIG.16

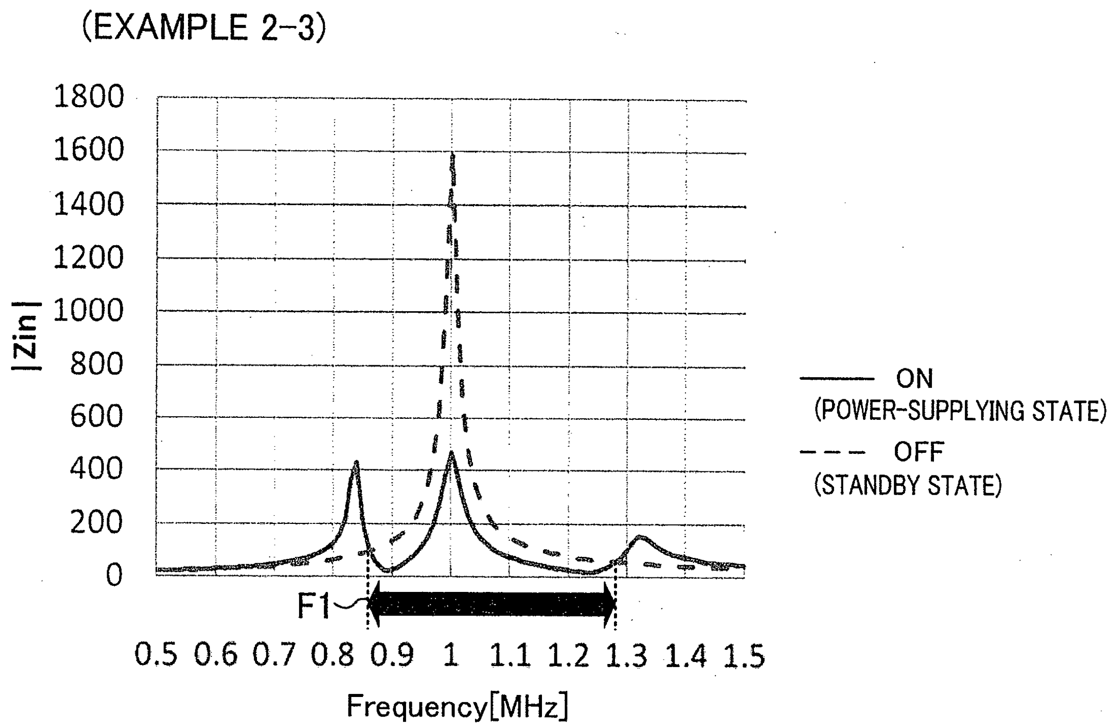
(EXAMPLE 2-3)
1800
1600
1400
1200
1000
800
600
400
200
0
|Zin|
F1
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.17

(EXAMPLE 3-1)

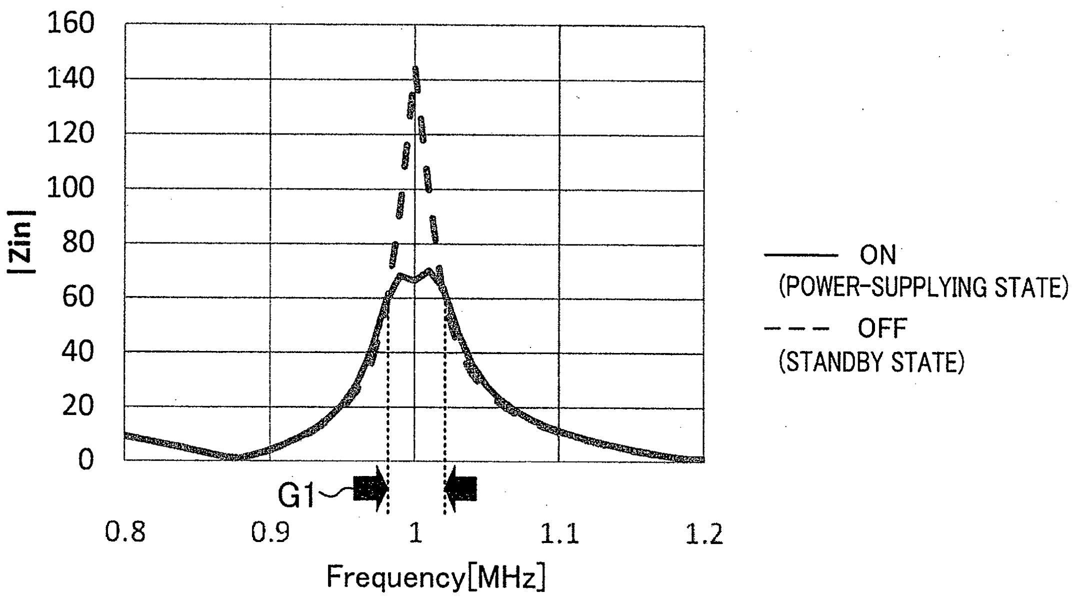

FIG.18

(EXAMPLE 3-2)

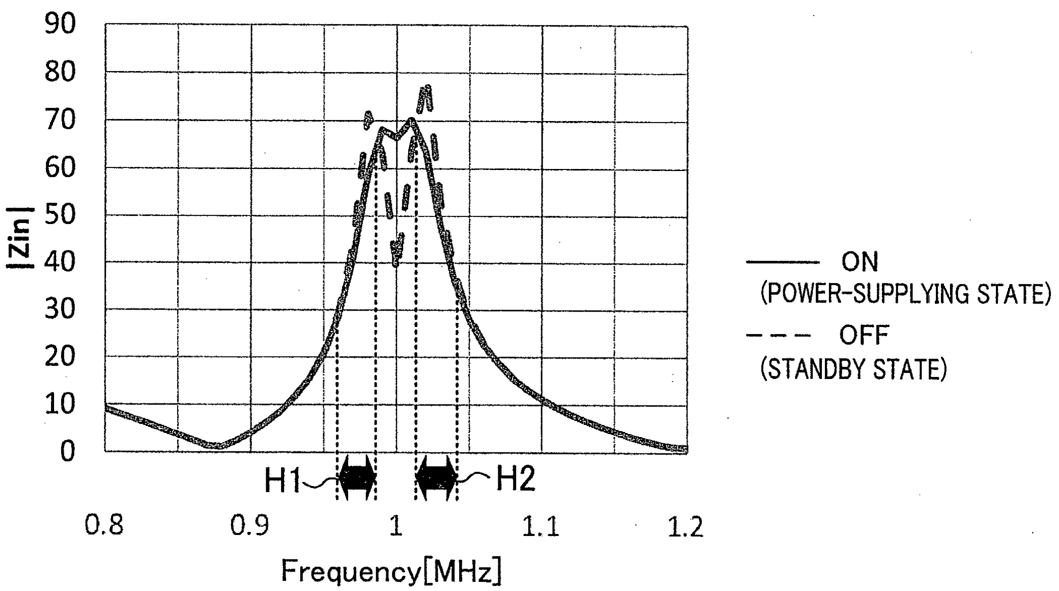

FIG.19

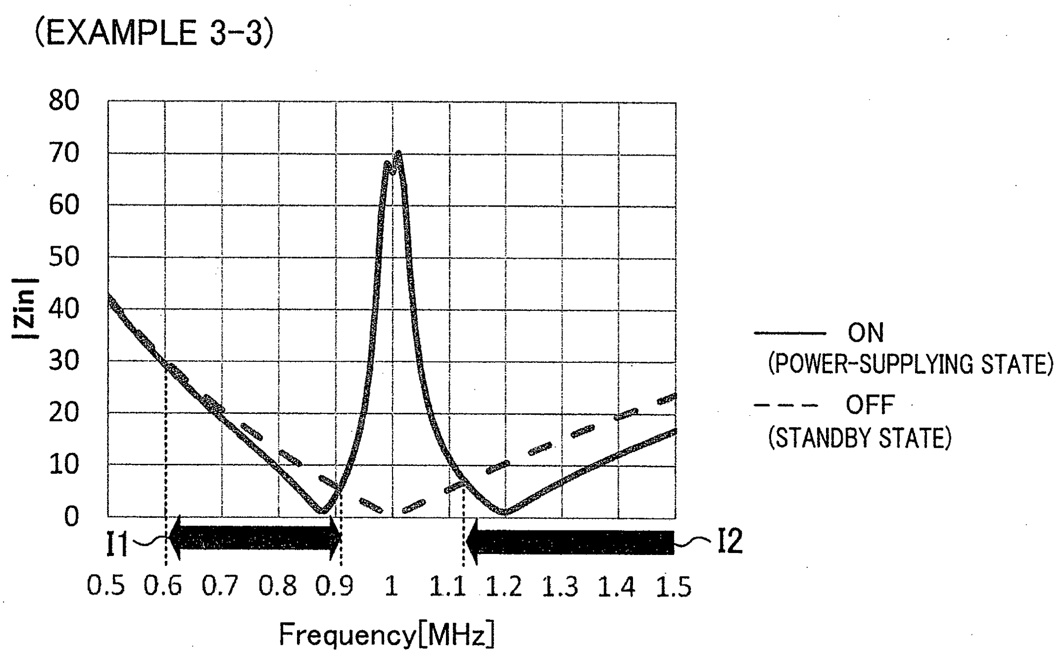
(EXAMPLE 3-3)
80
70
60
50
40
30
20
10
0
|Zin|
I1
I2
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.20

(EXAMPLE 4-1)

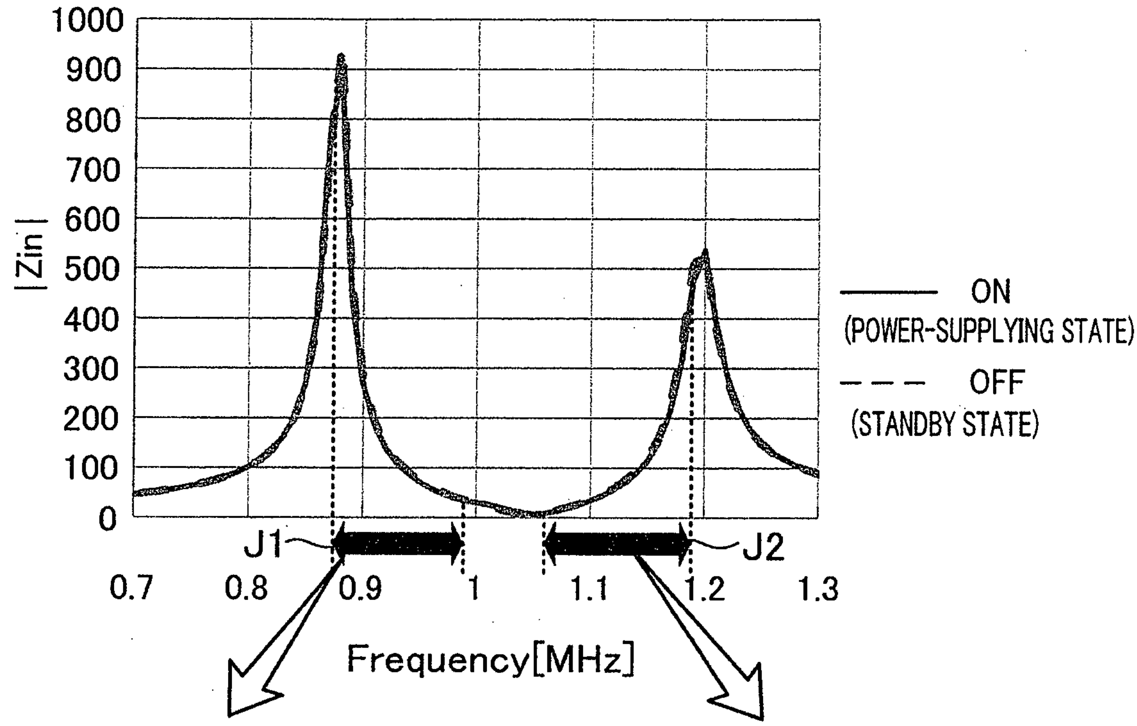


<J1>

| Frequency (MHz) | \| Zin \| (ON) IN POWER -SUPPLYING STATE | \| Zin \| (OFF) IN STANDBY STATE |
|---|---|---|
| 0.880 | 907.5 | 947.7 |
| 0.890 | 449.2 | 469.4 |
| 0.900 | 270.0 | 279.6 |
| 0.910 | 187.1 | 193.3 |
| 0.920 | 140.0 | 144.6 |
| 0.930 | 109.6 | 113.4 |
| 0.940 | 88.0 | 91.5 |
| 0.950 | 71.8 | 75.2 |
| 0.960 | 59.1 | 62.4 |
| 0.970 | 48.6 | 52.0 |
| 0.980 | 40.3 | 43.2 |
| 0.990 | 34.3 | 35.6 |

<J2>

| Frequency (MHz) | \| Zin \| (ON) IN POWER -SUPPLYING STATE | \| Zin \| (OFF) IN STANDBY STATE |
|---|---|---|
| 1.060 | 8.3 | 9.2 |
| 1.070 | 12.8 | 14.5 |
| 1.080 | 18.8 | 20.8 |
| 1.090 | 25.8 | 28.0 |
| 1.100 | 33.9 | 36.3 |
| 1.110 | 43.5 | 46.2 |
| 1.120 | 55.1 | 58.2 |
| 1.130 | 69.6 | 73.2 |
| 1.140 | 88.4 | 93.0 |
| 1.150 | 114.2 | 120.2 |
| 1.160 | 151.9 | 160.3 |
| 1.170 | 211.3 | 224.6 |
| 1.180 | 313.4 | 336.4 |
| 1.190 | 477.2 | 508.5 |

FIG.21

(EXAMPLE 4-2)

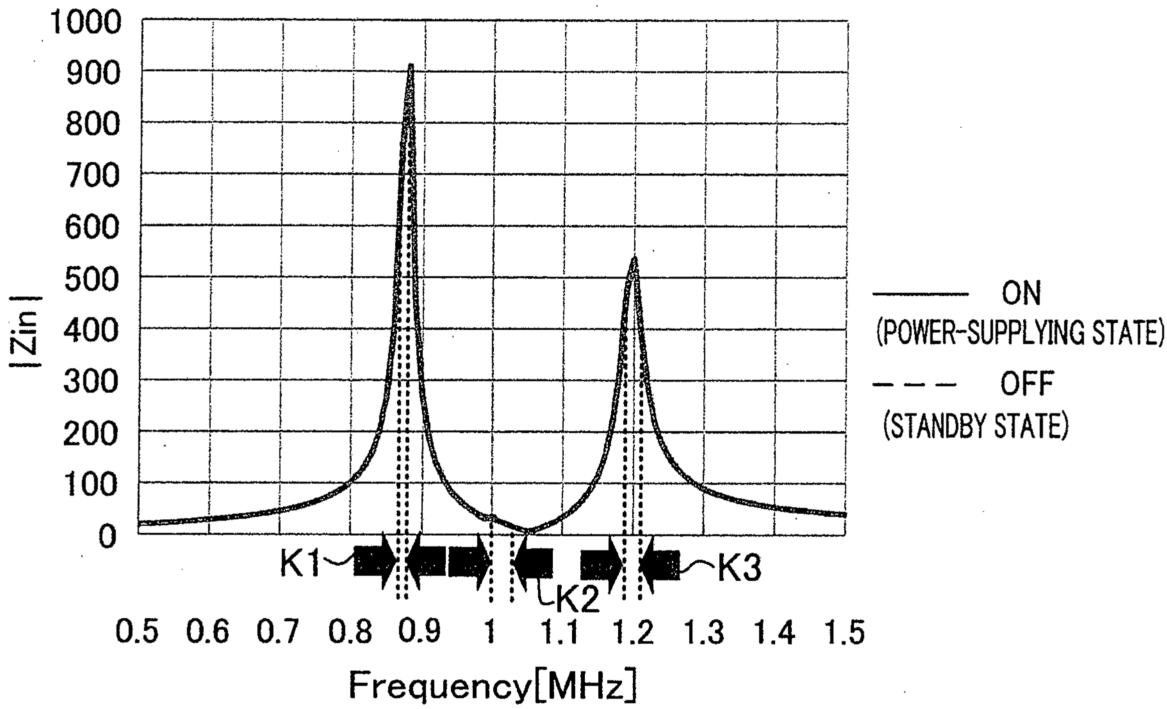


<K1>

| Frequency(MHz) | \| Zin \| (ON) IN POWER-SUPPLYING STATE | \| Zin \| (OFF) IN STANDBY STATE |
|---|---|---|
| 0.870 | 752.2 | 754.2 |
| 0.880 | 907.5 | 911.3 |

<K2>

| Frequency(MHz) | \| Zin \| (ON) IN POWER-SUPPLYING STATE | \| Zin \| (OFF) IN STANDBY STATE |
|---|---|---|
| 1.000 | 30.7 | 35.4 |
| 1.010 | 26.7 | 32.2 |
| 1.020 | 21.3 | 23.4 |
| 1.030 | 15.7 | 16.3 |

<K3>

| Frequency(MHz) | \| Zin \| (ON) IN POWER-SUPPLYING STATE | \| Zin \| (OFF) IN STANDBY STATE |
|---|---|---|
| 1.190 | 477.2 | 480.8 |
| 1.200 | 536.5 | 541.4 |
| 1.210 | 396.8 | 398.6 |

FIG.22

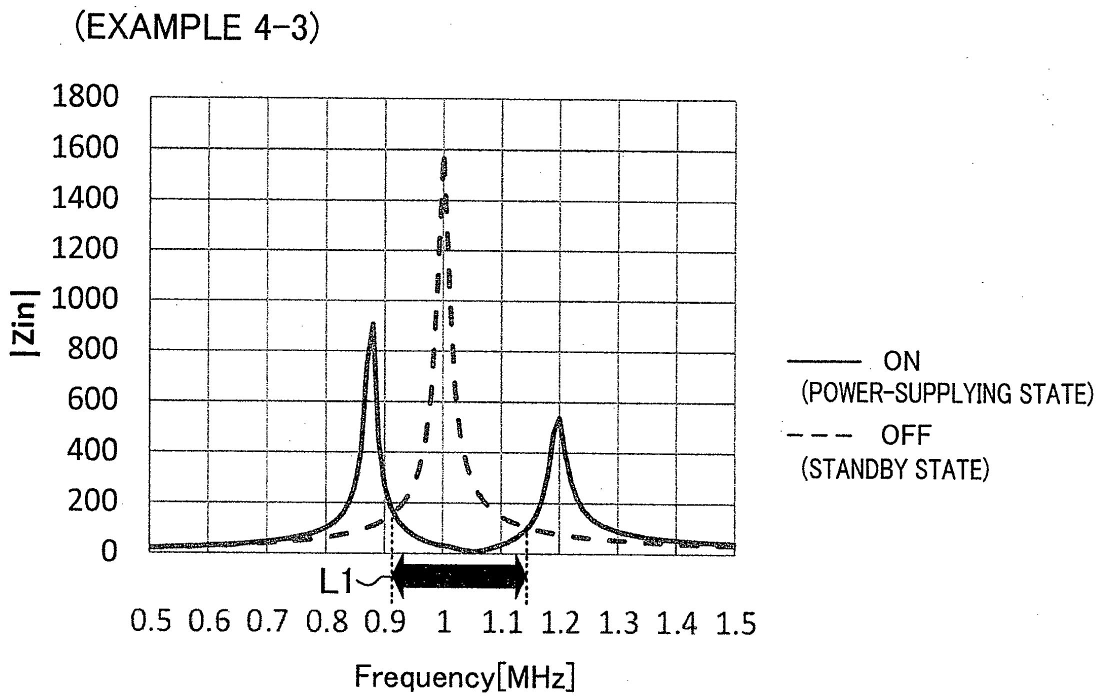
(EXAMPLE 4-3)
1800
1600
1400
1200
1000
800
600
400
200
0
|Zin|
L1
0.5 0.6 0.7 0.8 0.9 1 1.1 1.2 1.3 1.4 1.5
Frequency[MHz]
ON
(POWER-SUPPLYING STATE)
OFF
(STANDBY STATE)

FIG.23

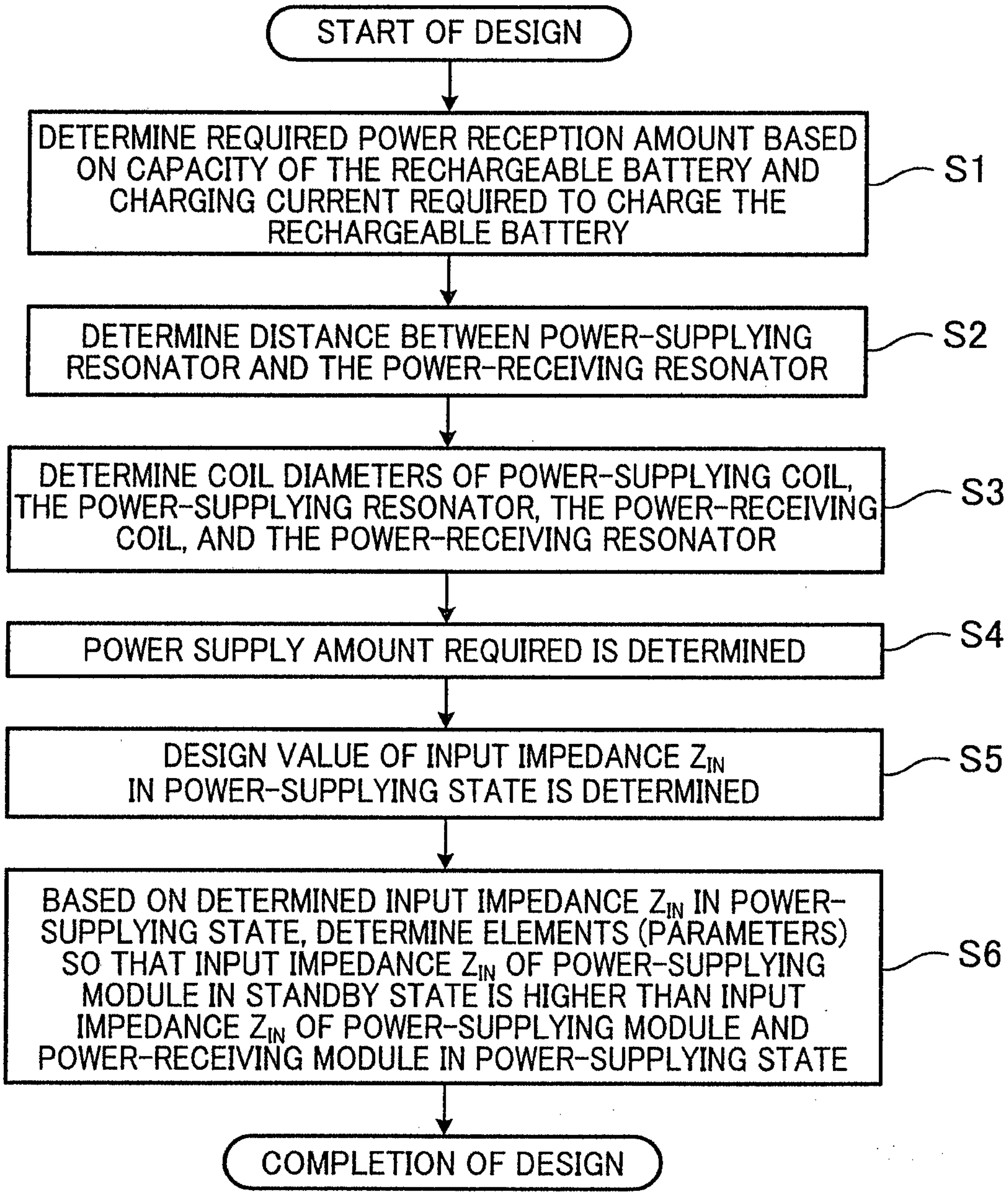
START OF DESIGN
DETERMINE REQUIRED POWER RECEPTION AMOUNT BASED ON CAPACITY OF THE RECHARGEABLE BATTERY AND CHARGING CURRENT REQUIRED TO CHARGE THE RECHARGEABLE BATTERY
S1
DETERMINE DISTANCE BETWEEN POWER-SUPPLYING RESONATOR AND THE POWER-RECEIVING RESONATOR
S2
DETERMINE COIL DIAMETERS OF POWER-SUPPLYING COIL, THE POWER-SUPPLYING RESONATOR, THE POWER-RECEIVING COIL, AND THE POWER-RECEIVING RESONATOR
S3
POWER SUPPLY AMOUNT REQUIRED IS DETERMINED
S4
DESIGN VALUE OF INPUT IMPEDANCE $Z_{IN}$ IN POWER-SUPPLYING STATE IS DETERMINED
S5
BASED ON DETERMINED INPUT IMPEDANCE $Z_{IN}$ IN POWER-SUPPLYING STATE, DETERMINE ELEMENTS (PARAMETERS) SO THAT INPUT IMPEDANCE $Z_{IN}$ OF POWER-SUPPLYING MODULE IN STANDBY STATE IS HIGHER THAN INPUT IMPEDANCE $Z_{IN}$ OF POWER-SUPPLYING MODULE AND POWER-RECEIVING MODULE IN POWER-SUPPLYING STATE
S6
COMPLETION OF DESIGN

## INTERNATIONAL SEARCH REPORT

International application No.
PCT/JP2014/064089

**A. CLASSIFICATION OF SUBJECT MATTER**
*H02J17/00*(2006.01)i

According to International Patent Classification (IPC) or to both national classification and IPC

**B. FIELDS SEARCHED**

Minimum documentation searched (classification system followed by classification symbols)
H02J17/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-178916 A (Universal Device Technology Co., Ltd.), 13 September 2012 (13.09.2012), paragraphs [0007], [0014] to [0027] (Family: none) | 1,5<br>2-4 |
| Y | WO 2012/132841 A1 (Sony Corp.), 04 October 2012 (04.10.2012), paragraphs [0073], [0074], [0090], [0097]; fig. 12, 16(B), 18(A) & CN 102738908 A & CN 202602379 U & TW 201251258 A | 2-4 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 June, 2014 (16.06.14) | 01 July, 2014 (01.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/064089

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-64403 A (Nippon Telegraph and Telephone Corp.), 28 February 2002 (28.02.2002), paragraph [0007] (Family: none) | 1-5 |
| A | US 2012/0242158 A1 (SAMSUNG ELECTRO-MECHANICS CO., LTD.), 27 September 2012 (27.09.2012), paragraphs [0062] to [0066]; claim 1 & KR 10-2012-0108190 A & CN 102694421 A | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4624768 B
- JP 2010239769 A
- JP 2013062895 A